# EUROPEAN PATENT SPECIFICATION

(11) **EP 3 166 221 B1**
(45) Date of publication and mention of the grant of the patent: **05.06.2019**
(21) Application number: 16196966.2
(22) Date of filing: 02.11.2016
(51) Int. Cl.: F24S 25/00, F24S 20/50, H02S 30/20, H02S 10/40, F24S 30/00

(54) **SOLAR PANEL ASSEMBLY AND METHOD FOR DEPLOYING SOLAR PANEL ASSEMBLY**
SOLARPANEELANORDNUNG UND VERFAHREN FÜR DEN EINSATZ EINER SOLARPANEELANORDNUNG
ENSEMBLE DE PANNEAUX SOLAIRES ET PROCÉDÉ DE DÉPLOIMENT D'UN ENSEMBLE DE PANNEAUX SOLAIRES

(30) Priority: 04.11.2015 NL 2015717
(43) Date of publication of application: 10.05.2017
(73) Proprietor: Bredenoord B.v., 7325 WT Apeldoorn (NL)
(72) Inventor: DE GRAAF, Dirkjan Elbertus, 7325 WT APELDOORN (NL); VAN WOLFSWINKEL, Breunis, 7325 WT APELDOORN (NL); KEURHORST, Evert Hendrik, 7325 WT APELDOORN (NL)
(74) Representative: Peters, Sebastian Martinus

(56) References cited:
- WO-A1-2010/125547
- WO-A1-2011/128463
- WO-A1-2014/186345
- WO-A1-2014/209420
- AT-A4- 511 610
- KR-A- 20110 007 270
- US-A1- 2011 132 353
- US-A1- 2012 216 850
- US-A1- 2014 125 134

## Description

### BACKGROUND

The invention relates to a solar panel assembly and a mobile unit comprising one or more of said solar panel assemblies.

WO 2011/096007 A2 discloses a mobile solar power-generating system comprising a prismatic container having a top wall, a bottom wall and side walls. A central photovoltaic panel is supported in a tiltable manner on the top wall by supporting means. On each of the sides of the central photovoltaic panel, correspondent transversal photovoltaic panels are hinged, hanging downward in a rest position and being able to rotate ninety degrees upward. On a side of each transversal photovoltaic panel, a side photovoltaic panel is hinged that is designed to fold down with respect to the relevant transversal photovoltaic panel. Mutual engagement means are provided for keeping the transversal photovoltaic panels and the side photovoltaic panels coplanar to the central photovoltaic panel when the power-generating system is in an operating position. Once the central, transversal and side photovoltaic panels form one assembly, this assembly can be sloped with respect to the horizontal plane of the power generating system.

Although it is the object of the known mobile solar power-generating system to allow photovoltaic panels to be deployed in a comfortable and easy way, it is immediately apparent that manually folding out the considerable number of photovoltaic panels by consecutive upward rotations still requires a lot of manual effort.

Prior art Document WO 2010/125547 A1 discloses a solar panel assembly according to the preamble of claim 1, and a method for deploying a solar panel assembly.

It is an object of the present invention to provide a solar panel assembly, a mobile unit comprising one or more of said solar panel assemblies and a method for deploying a solar panel assembly, wherein the deployment of the solar panels can be performed with more ease of use.

### SUMMARY OF THE INVENTION

According to a first aspect, the invention provides a solar panel assembly comprising a first solar panel, a second solar panel and a base for supporting the first solar panel and the second solar panel, wherein the first solar panel is deployable from a first base position at the base into a first deployment position below the base by rotation with respect to the base about a first rotation axis, wherein the second solar panel is deployable from a second base position at the base into a second deployment position above the base by rotation with respect to the base about a second rotation axis, wherein the first solar panel is arranged to be deployed from the first base position towards the first deployment position at least partially under the influence of a first gravitational force acting on the first solar panel, wherein the solar panel assembly is provided with a deployment mechanism that connects the first solar panel to the second solar panel to convert the first gravitational force into a deployment force assisting the rotation of the second solar panel from the second base position towards the second deployment position.

By using the first gravitational force acting on the first solar panel to assist the deployment of the second solar panel, the manual effort involved with said deployment can be reduced. In particular, the second solar panel can be lifted against a second gravitational force acting on the second solar panel with the assistance of the deployment force. The solar panel assembly can thus be deployed with less manual effort and/or with more ease of use.

In an embodiment the deployment mechanism is coupled to the first solar panel and the second solar panel at a first coupling position and a second coupling position, respectively, wherein the first coupling position and the second coupling position are spaced apart from the first rotation axis and the second rotation axis, respectively. The spacing can generate a moment of forces about the respective rotation axes, which can be converted into a force acting on or being transferred by the deployment mechanism.

In an embodiment thereof the first solar panel has a center of gravity that is spaced apart from the first rotation axis, wherein the first coupling position is at a side of the first rotation axis opposite to the center of gravity of the first solar panel. Thus, a movement of the first solar panel at center of gravity thereof causes an opposite movement of the first coupling position. E.g. a downward rotation of the center of gravity can cause an upward displacement of the deployment mechanism towards the second solar panel.

In a further embodiment the second solar panel has a center of gravity that is spaced apart from the second rotation axis, wherein the second coupling position is at the same side of the second rotation axis as the center of gravity of the second solar panel. As a result, a movement of the second coupling position causes a movement of the second solar panel at the center of gravity thereof in the same direction. Hence, an upward displacement of the deployment mechanism can cause the second coupling position, and thus the second solar panel, to rotate upwards.

In an embodiment thereof the second solar panel during the rotation from the second base position towards the second deployment position moves through a dead center position in which its center of gravity is vertically above the second rotation axis, wherein the deployment force is arranged for assisting the rotation of the second solar panel from the second base position towards the dead center position. By rotating the second solar panel towards the dead center position, an increasing part of the weight of the second solar panel can be supported on the base. The manual effort required for the rotation of the second solar panel through the dead center can be reduced considerably.

In an embodiment thereof the deployment mechanism comprises a buffer member that is coupled to the second solar panel at the second coupling position and a connecting member that is coupled to the first solar panel at the first coupling position, wherein the connecting member is linked to the buffer member for transmitting the deployment force from the first solar panel to the second solar panel, wherein the buffer member has a length that is variable within a buffer range, wherein the second solar panel is rotatable through its dead center position within the buffer range of the buffer member. The buffer member can thus facilitate rotation of the second solar panel independently from the (stationary) position of the first solar panel.

In an embodiment thereof the deployment mechanism further comprises a lever that links the connecting member to the buffer member, wherein the lever is rotatable with respect to the second solar panel about a lever axis, wherein the connecting member and the buffer member are coupled to the lever on the same side of and spaced apart from the lever axis. The lever can transmit the displacement of the connecting member onto the buffer member.

In a preferred embodiment thereof the lever axis is parallel or substantially parallel to the second rotation axis.

In a further embodiment the lever is arranged to extend to above the second solar panel when the second solar panel is in the second base position, preferably wherein the buffer member is arranged to transmit the deployment force onto the second solar panel when the buffer member is at or near the upper end of the buffer range. The buffer member can thus exert forces onto the second solar panel from above the second base position, e.g. to pull the second solar panel upwards. The buffer member can absorb the deployment force within its buffer range during the initial stages of deployment to delay the deployment of the second solar panel until the first solar panel has been rotated towards the first deployment position.

In an embodiment the lever comprises a first lever section that is rotatable with respect to the lever axis and a second lever section that is hingably connected to the first lever section at the side of the first lever section facing away from the lever axis, wherein the connecting member is coupled to the first lever section and the buffer member is coupled to the second lever section. The lever sections can prevent a dead center situation of the deployment mechanism with respect to the second solar panel when the second solar panel approaches or is in the second deployment position.

In a further embodiment the second solar panel is arranged to be deployed towards the second deployment position at least partially under the influence of a second gravitational force acting on the second solar panel, wherein the buffer member is arranged to at least partially absorb the second gravitational force. The buffer member can thus slow down or resist the descend of the second solar panel to prevent it from dropping down into the second deployment position to fast or even out of control.

In an embodiment the buffer member is an accumulator, preferably a pneumatic accumulator and most preferably a gas spring. A pneumatic accumulator such as a gas spring can be compressed to build up energy, while extension can cause a partial vacuum that will tend to bias the accumulator to retract.

In an embodiment the solar panel assembly is provided with a stopping member that stops the first solar panel in the first deployment position, wherein the deployment mechanism is arranged to retain the second solar panel in the second deployment position when the first solar panel is stopped by the stopping member in the first deployment position.

In an embodiment the second solar panel in the second base position is arranged to extend between the base and the first solar panel in the first base position. Hence, a compact package of the first solar panel, the second solar and the base can be formed.

In a preferred embodiment the base comprises a third solar panel extending between first rotation axis and the second rotation axis. The third solar panel can increase the electrical power generation capacity of the solar panel assembly.

In an embodiment the aforementioned solar panels are arranged to be parallel, substantially parallel, coplanar or substantially coplanar when the first solar panel and the second solar panel are deployed into the first deployment position and the second deployment position, respectively. Thus, all of the solar panels can be optimized under the same angle or slope with respect to the incoming sunlight.

In an embodiment the solar panel assembly further comprises a support and an angle beam for supporting the base under an oblique angle with respect to the support. The angle beam can ensure that the base and the solar panels associated therewith remain positioned under the required angle or slope.

In an embodiment the first rotation axis and the second rotation axis are spaced apart. This allows for the first solar panel and the second solar to be folded on top of each other. Furthermore, it allows for the aforementioned third solar panel to be positioned in an intermediate position between the first solar panel and the second solar panel.

Preferably, the first rotation axis and the second rotation axis are parallel or substantially parallel. Hence, both the first solar panel and the second solar panel can be rotated in the same plane, yet in opposite directions.

In an embodiment the first rotation axis and the second rotation axis are horizontal or substantially horizontal. This allows for the first solar panel to be rotated into the first deployment position vertically below the base and for the second solar panel to be rotated into the second deployment position vertically above the base.

According to a second aspect, the invention provides a mobile unit comprising one or more of the aforementioned solar panel assemblies and a container for storing said one or more solar panel assemblies in a storage position. The one or more solar panel assemblies can be stored in the container after use. The container can shield the solar panel assemblies against the weather. The container can furthermore be handled and/or transported between different locations, thereby increasing the mobility of the mobile unit.

In an embodiment thereof the mobile unit comprises a plurality of the solar panel assemblies, wherein at least some of the solar panel assemblies are grouped into a first group that is arranged to fold out of the container towards a folded out position about a first vertical fold axis at a first side of the container. By grouping the solar panel assemblies, they can be folded out simultaneously.

In an embodiment thereof the first group comprises at least a first set and a second set of one or more solar panel assemblies, wherein the first set is arranged to fold with respect to the container about the first vertical fold axis and wherein the second set is arranged to fold with respect to the first set about a second vertical fold axis at a side of the first set opposite to the first fold axis. By having a plurality of sets of solar panel assemblies, the solar panel assemblies can be folded out and stored in sections, thereby increasing the folded out dimensions of the solar panel assemblies with respect to the limited dimensions of the container.

In an embodiment thereof the first group further comprises a third set of one or more solar panel assemblies, wherein the third set is arranged to fold with respect to the first set about a third vertical fold axis at the same side of the first set as the first fold axis. The third set can thus be folded out with respect to the first set to an opposite side of said first set with respect to the second set.

In an embodiment thereof the first set is arranged to fold away from the container towards the folded out position, while the third set is arranged to fold back towards the container with respect to the first set. The third set can thus be folded back into a folded out position in close proximity to or in front of the container.

In a further embodiment of the mobile unit, at least some of the solar panel assemblies are grouped into a second group that is arranged to fold out of the container towards a folded out position about a fourth vertical fold axis at a second side of the container, opposite to the first side. By grouping the solar panel assemblies in two groups, they can be folded out in two simple steps.

In an embodiment thereof the second group comprises at least a fourth set and a fifth set of one or more solar panel assemblies, wherein the fourth set is arranged to fold with respect to the container about the fourth vertical fold axis and wherein the fifth set is arranged to fold with respect to the fourth set about a fifth vertical fold axis at a side of the fourth set opposite to the fourth fold axis. Again, by having a plurality of sets of solar panel assemblies, the solar panel assemblies can be folded out and stored in sections, thereby increasing the folded out dimensions of the solar panel assemblies with respect to the limited dimensions of the container.

In a further embodiment thereof the container has an open third side between the first side and the second side to allow the first group and the second group to fold in and out of the container, wherein the fourth fold axis is spaced apart from the open third side over a hinge distance and wherein the second group is spaced apart from the fourth fold axis in a direction away from the open third side over a spacing distance, wherein the spacing distance is equal to or larger than the hinge distance. The second group can thus be recessed from the open third side while still being able to be rotated around the edge of the second side into the folded out position of said second group.

In an embodiment thereof the second group, in the storage position, is recessed from the open third side over a distance that is equal to or larger than the space consumed by the first group in said storage position. The first group can thus be stored in front of the second group in the storage position.

In an embodiment relating to the sets of the solar panel assemblies, each set comprises at least three of the solar panel assemblies. The sets can thus be folded out at least three solar panel assemblies at a time.

In an embodiment the mobile unit is provided with one or more supports for supporting the bases of each of the solar panel assemblies in the folded out position. Preferably, the one or more supports are arranged for supporting the full weight of the one or more solar panel assemblies with respect to the container. Most preferably, the container is arranged to be placed onto a ground surface the one or more supports are arranged for supporting the one or more solar panel assemblies with a ground clearance above the ground surface. The solar panel assemblies can thus be supported by the container independent of the condition of the ground surface directly below it. This allows for the mobile unit to be placed on an area requiring only a limited flat ground surface at the location of the container.

According to a third aspect, the invention provides a method for deploying the aforementioned solar panel assembly, wherein the method comprises the steps of; deploying the first solar panel from the first base position towards the first deployment position at least partially under the influence of a first gravitational force acting on the first solar panel; and converting the first gravitational force with the deployment mechanism into a deployment force assisting the rotation of the second solar panel from the second base position towards the second deployment position.

For the advantages of the method and the embodiments thereof below please refer to the corresponding features of the aforementioned solar panel assembly and the mobile unit.

In an embodiment of the method the second solar panel during the rotation from the second base position towards the second deployment position moves through a dead center position in which its center of gravity is vertically above the second rotation axis, wherein the deployment force is arranged for assisting the rotation of the second solar panel from the second base position towards the dead center position.

In a further embodiment of the method further comprises the step of pulling the second solar panel through the dead center position towards the dead center position.

In a further embodiment of the method the second solar panel deployed from the dead center position towards the second deployment position at least partially under the influence of a second gravitational force acting on the second solar panel, wherein the method comprises the step of providing a buffer member that at least partially absorbs the second gravitational force.

In a further embodiment of the method the second solar panel in the second base position extends between the base and the first solar panel in the first base position, wherein the first solar panel is rotated towards the first deployment position prior to the second solar panel solar panel being rotated towards the second deployment position.

In a preferred embodiment the method comprises the step of providing a mobile unit comprising a plurality of the solar panel assemblies and a container for storing the plurality of solar panel assemblies, wherein at least some of the solar panel assemblies are grouped into a first group that folds out of the container towards a folded out position about a first vertical fold axis at a first side of the container, wherein the first group comprises at least a first set and a second set of one or more solar panel assemblies, wherein the first set folds with respect to the container about the first vertical fold axis and wherein the second set folds with respect to the first set about a second vertical fold axis at a side of the first set opposite to the first fold axis, wherein the first group further comprises a third set of one or more solar panel assemblies, wherein the third set folds with respect to the first set about a third vertical fold axis at the same side of the first set as the first fold axis, wherein the method further comprises the steps of; folding the first set away from the container towards the folded out position; and folding the third set back towards the container with respect to the first set.

In an embodiment thereof the second set is folded towards the folded out position after the third set has been folded back.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached schematic drawings, in which:
figure 1 shows an isometric view of a mobile unit according to the invention comprising a container and a plurality of solar panel assemblies which, in figure 1, are in a storage position inside the container;
figures 2A-2E show top views of the steps of folding out the plurality of solar panel assemblies of figure 1 with respect to the container;
figure 3 shows an isometric view of the solar panel assemblies of figure 1 in a folded out position outside the container;
figure 4 shows one of the solar panel assemblies according to figure 3 in more detail in a partly deployed state;
figures 5A-5H show side views of the steps of deploying the solar panels of one of the folded out solar panel assemblies according to figure 3;
figure 6 shows an isometric front view of the folded out solar panel assemblies according to figure 3 with their respective solar panels deployed; and
figure 7 shows a rear view of the mobile unit according to figure 6.

### DETAILED DESCRIPTION OF THE INVENTION

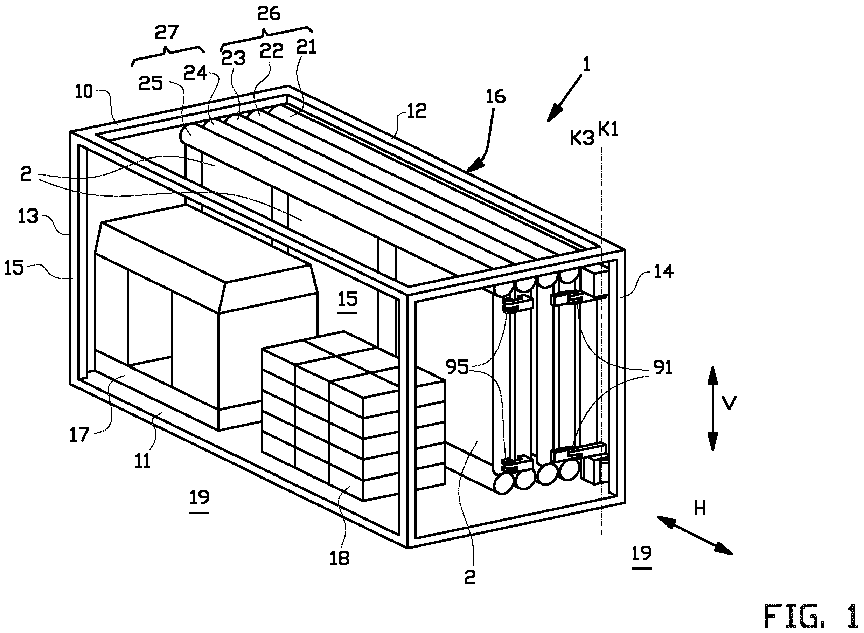

Figures 1-7 show a mobile solar power generation unit 1 (hereafter mobile unit 1) according to an exemplary embodiment of the invention. The mobile unit 1 comprises a plurality of solar panel assemblies 2 for generating electrical power and a container 10 for storing said solar panel assemblies 2.

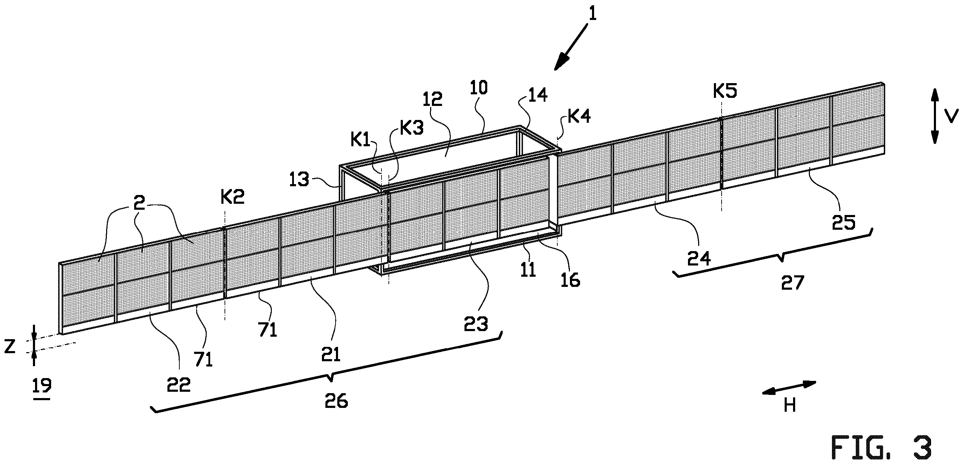

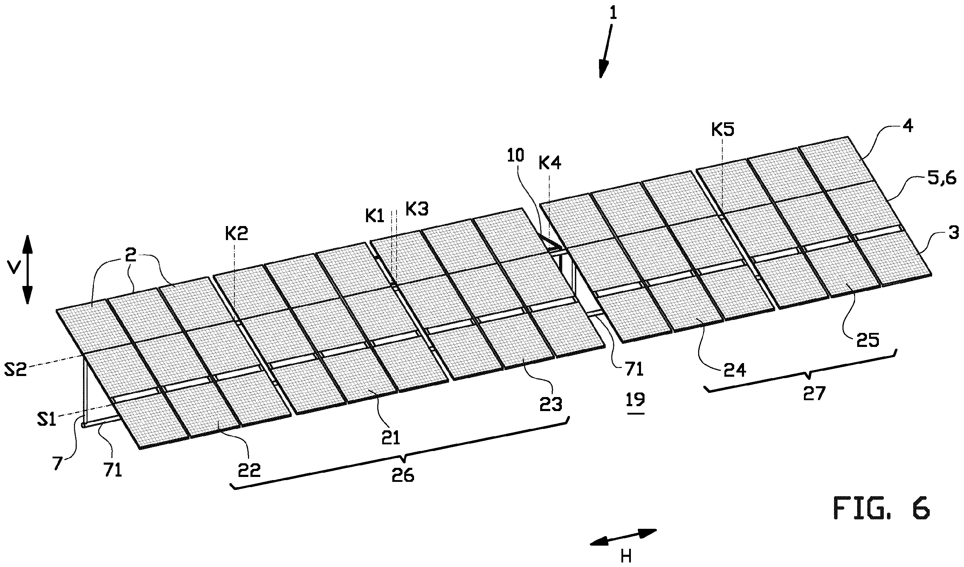

The solar panel assemblies 2 are foldable into and out of the container 10 between a storage position inside the container 10 and a folded out position outside of the container 10, as shown in figures 1 and 3, respectively. As best seen in figure 6, each solar panel assembly 2 comprises a first solar panel 3, a second solar panel 4 and a third solar panel 5. The solar panels 3, 4, 5 are photovoltaic panels comprising a grid of solar cells that absorb the energy of sun rays. The solar panels 3, 4, 5 are deployable into respective deployment positions, as shown in figure 6, in a manner that will be described hereafter in more detail. The container 10 is arranged to be portable, transportable or mobile, e.g. by placing it on a truck or by providing it with wheels (not shown).

The horizontal direction and the vertical direction of the container 10 are schematically represented by arrows H and V, respectively. In the following description, references to horizontal and vertical relate to the horizontal direction H and the vertical direction, respectively, provided that the container 10 is placed on a substantially level, flat and/or horizontal ground 19. Minor deviations from the horizontal direction H or the vertical direction V, e.g. in the order of a few degrees, are considered to fall within the meaning of 'substantially' horizontal and/or 'substantially' vertical.

As shown in figure 1, the container 10 comprises a bottom wall 11 that is placed horizontally or substantially horizontally on the ground 19, a top wall 12 extending parallel to the bottom wall 11 and a first side 13 and a second side 14 standing up vertically from the bottom wall 11 and connecting the bottom wall 11 to the top wall 12 on opposite sides of the container 10. The walls 11, 12 and the sides 13, 14 define an internal space 15 of the container 10. The container 10 is open or openable at least at a third side 16 of the container 10 between the first side 13 and the second side 14 to allow access to the internal space 15. Said third side 16 may be temporarily closed by a suitable cover, e.g. a door or a screen (not shown) when the mobile unit 1 is not operational. In this exemplary embodiment, the container 10 is elongated container with the first side 13 and the second side 14 forming the transversal sides of the container 10 and the third side 16 being one of the longitudinal sides of the elongate container 10. Preferably, the container 10 is a modified shipping container, e.g. a container with ISO dimensions. The container 10 has open sides, which can optionally be closed by covers (not shown). Alternatively, the container 10 can also be an integral part of a truck trailer.

In addition to the solar panel assemblies 2, the container 10 optionally houses or accommodates a generator 17 that can be used for back-up power. The container 10 further comprises batteries 18 for temporarily storing said electrical power.

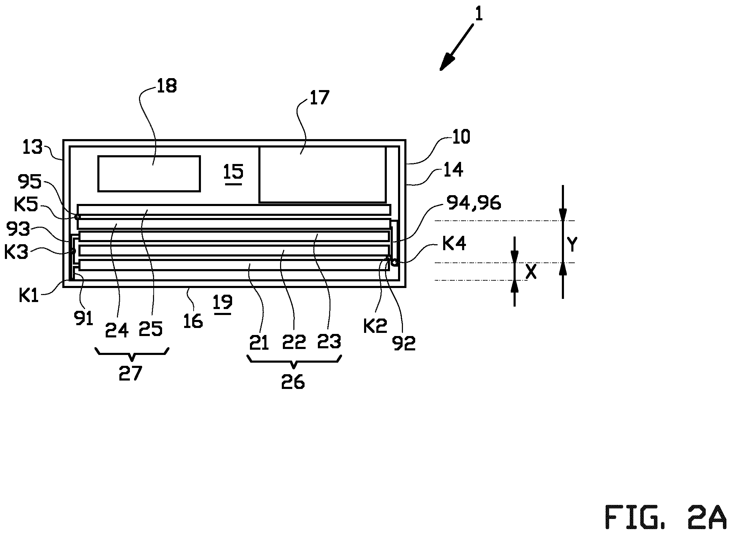

As shown in the top view of figure 2A, the solar panel assemblies 2 are divided into five sets 21, 22, 23, 24, 25 of solar panel assemblies 2. In this exemplary embodiment, each set 21-25 comprises three solar panel assemblies 2. The sets 21-25 are stored in the storage position in a first group 26 of three sets 21, 22, 23 and a second group 27 of two sets 24, 25. Naturally, the number and dimensions of solar panel assemblies 2 within each set 21-25 can be varied, as well as the number of sets, depending on the desired specifications of the mobile unit 1. A set 21-25 may even comprise a single solar panel assembly 2.

The sets 21-23, 24-25 within each group 26, 27 of solar panels assemblies 2 are hingably interconnected to facilitate the folding in and folding out of the respective solar panel assemblies 2 in accordance with the steps as shown in figures 2A-2E.

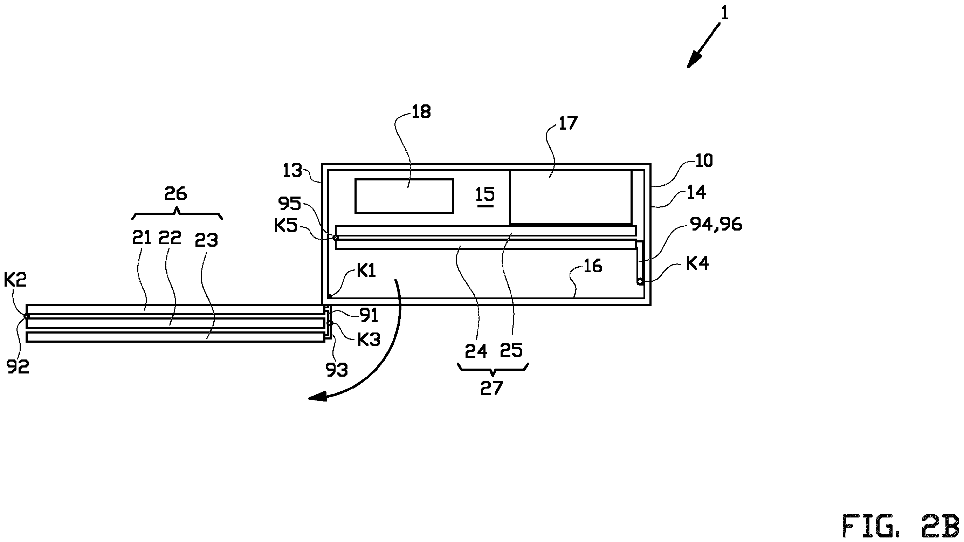

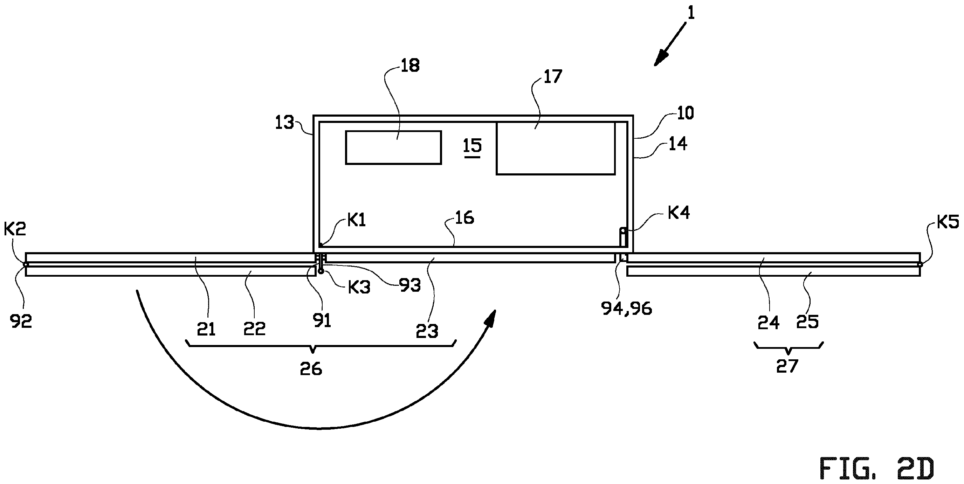

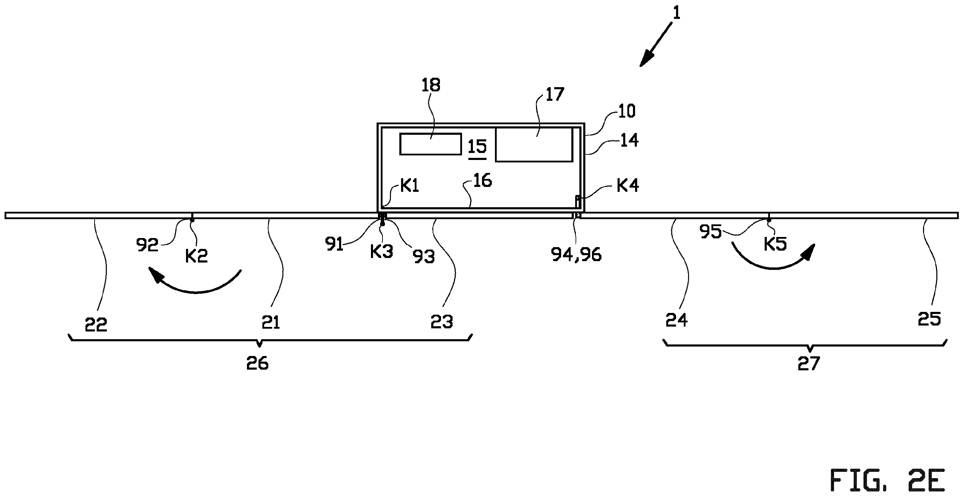

As shown in figure 2A, the first group 26 of solar panel assemblies 2 is hingably connected to the first side 13 via a first hinge member 91. More in particular, the first hinge member 91 connects the first set 21 of solar panel assemblies 2 to the first side 13 of the container 10 so as to be rotatable with respect to the container 10 about a first fold axis K1 extending in or substantially in the vertical direction V. The first fold axis K1 is located at or in close proximity to the open third side 16 of the container 10 so that the first group 26 of solar panel assemblies 2 can fold out of the container 10 into the folded out position as shown in figure 2B. The second set 22 is hingably connected to the first set 21 via a second hinge member 92 so as to be rotatable with respect to said first set 21 about a second fold axis K2. The second fold axis K2 is located at the opposite side of the first set 21 with respect to the first fold axis K1 and extends parallel to said first fold axis K2. The folding out of the second set 22 is blocked in figure 2B by the presence of the third set 23. As shown in figure 2D, the third set 23 is hingably connected to the first set 21 via a third hinge member 93 so as to be rotatable with respect to said first set 21 about a third fold axis K3 parallel to and near the first fold axis K1. The third hinge member 93 allows the third set 23 to fold back with respect to the folded out first set 21 about the third fold axis K3 into a position in front of the open third side 16 of the container 10. Once the third set 23 has been folded back into the position as shown in figure 2D, the second set 22 can be folded out about the second fold axis K2, as shown in figure 2E.

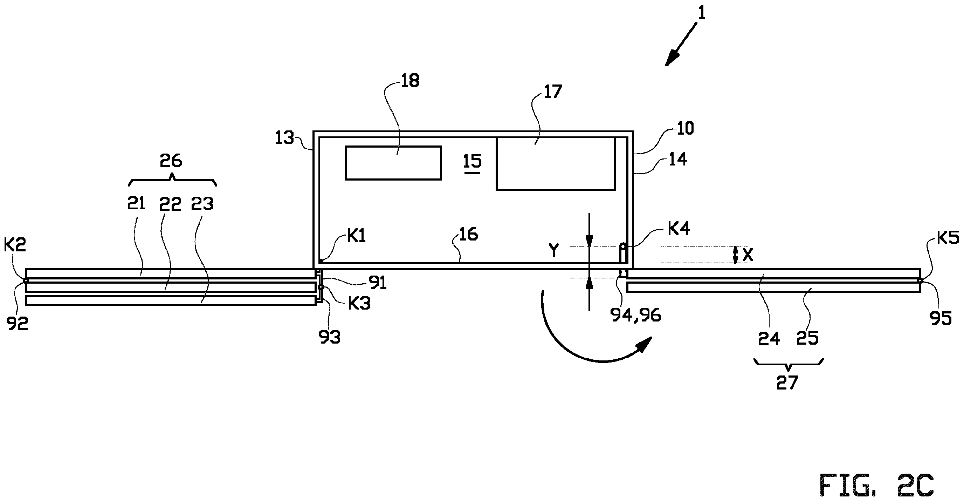

As shown in figure 2A, the second group 27 of solar panel assemblies 2 is hingably connected to the second side 14 via a fourth hinge member 94. More in particular, the fourth hinge member 94 connects the fourth set 24 of solar panel assemblies 2 to the second side 14 of the container 10 so as to be rotatable with respect to the container 10 about a fourth fold axis K4 extending in or substantially in the vertical direction V. The fourth fold axis K4 is located at a hinge distance X from the open third side 16 of the container 10, so that the second group 27 of solar panel assemblies 2 connected thereto is spaced apart from the open third side 16 of the container 10. In particular, the second group 27 is connected to the fourth hinge member 94 via a hinge arm 96 that spaces the second group 27 further from the open third side 16 over a spacing distance Y. This allows the second group 27 to be folded into the container 10 into a recessed storage position behind the storage position of the first group 26. The spacing distance Y is equal to or larger than the hinge distance X so that the second group 27 can be rotated about the fourth fold axis K4 around the second side 14 into its respective folded out position outside the container 10, as shown in figure 2C.

The second group 27 is folded out into the folded out position as shown in figure 2C prior to the third set 23 of the first group 26 being folded back into the position in front of the open third side 16 of the container 10 as shown in figure 2D. The fifth set 25 is hingably connected to the fourth set 24 via a fifth hinge member 95 so as to be rotatable with respect to said fourth set 24 about a fifth fold axis K5 into the folded out position as shown in figure 2E. The fifth fold axis K5 is located at the opposite side of the fourth set 24 with respect to the fourth fold axis K4 and extends parallel to said fourth fold axis K4.

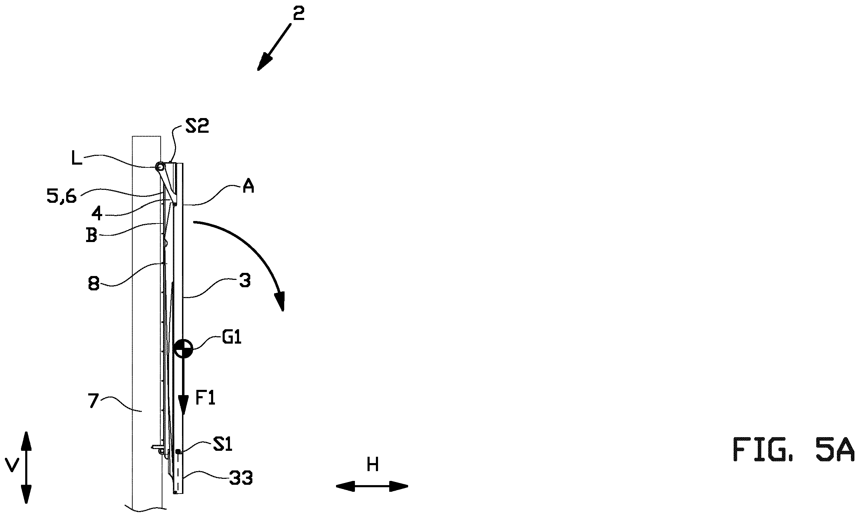

Once the sets 21-25 of solar panel assemblies 2 from both the first group 26 and the second group 27 are fully folded out, all sets 21-25 are arranged in line or substantially in line as shown in figure 3. Preferably, the sets 21-25 extend in line or substantially in line parallel to the open third side 16 of the container 2. The solar panel assemblies 2 are now ready to be deployed in accordance with the steps as shown in figures 5A-5H.

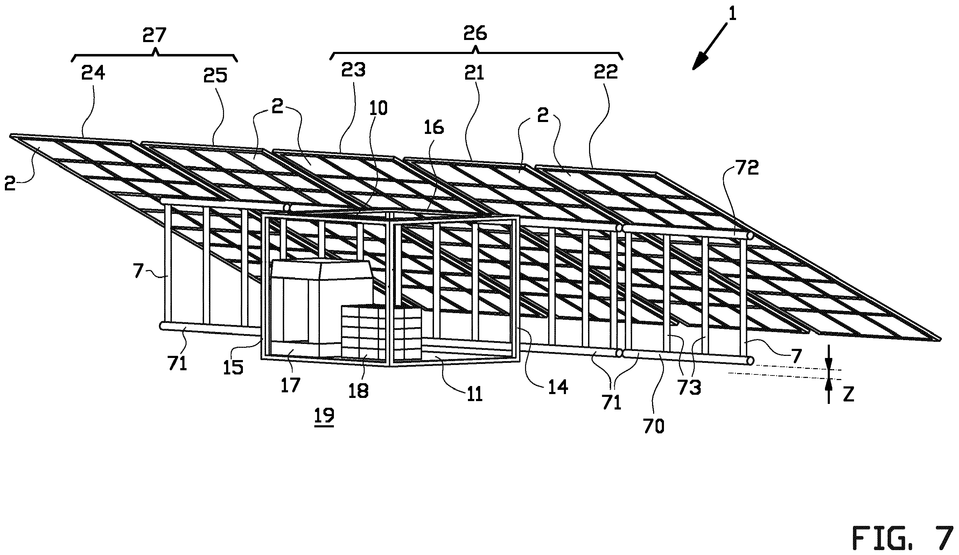

As shown in the rear view of figure 7, each set 21-25 of solar panel assemblies 2 comprises a support 7 for supporting the solar panel assemblies 2. Each support 7 supports the solar panel assemblies 2 of the respective set 21-25. In this exemplary embodiment, the support 7 comprises a frame 70 that is formed by a lower beam 71, an upper beam 72 and a plurality of cross beams 73 interconnecting the lower beam 71 and the upper beam 72. The lower beam 71 and the upper beam 72 extend horizontally or substantially horizontally. Each support 7 is arranged to carry or suspend the full weight of the solar panel assemblies 2 above, free and/or clear from the ground surface 9, as schematically indicated by ground clearance Z. Hence, the ground surface 9 does not necessarily have to be flat or level underneath the supports 7, provided that the container 10 itself is placed in a stable position on the ground surface 9. The solar panel assemblies 2, once deployed as shown in figure 6, are arranged to be tilted, sloped, inclined and/or angled about an angle axis M.

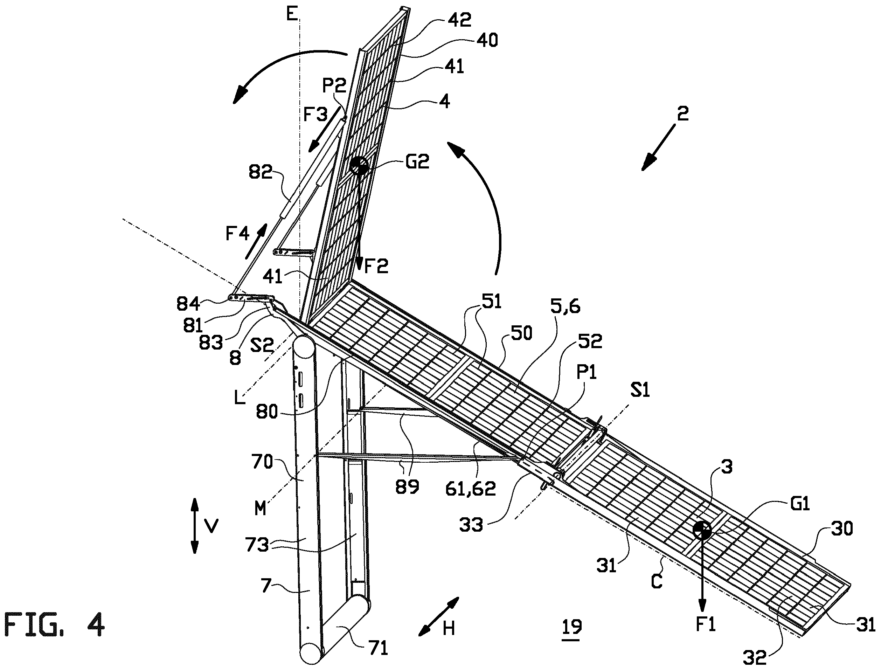

Figures 4 and 5A-5H show one of the solar panel assemblies 2 in more detail during its deployment. This solar panel assembly 2 is representative for and/or functionally equivalent to the other solar panel assemblies 2. The following description thus applies to all of the solar panel assemblies 2 of the mobile unit 1.

As shown in figure 4, the first solar panel 3 comprises a frame 30 and one or more panels 31 which are received in and/or secured to said frame 30. The panel 31 comprises a grid of photovoltaic solar cells which are known per se. The one or more panels 31 define a main surface 32 of said first solar panel 3. It can be observed that the second solar panel 4 and the third solar panel 5 have essentially the same construction, again comprising respective frames 40, 50, one or more respective panels 41, 51 and respective main surfaces 42, 52 defined by said one or more panels 41, 51.

During the deployment, the third solar panel 5 forms a base 6 for the deployment of the first solar panel 3 and the second solar panel 5. The first solar panel 3 is rotatable with respect to the base 6 about a first rotation axis S1. The second solar panel 4 is rotatable with respect to the base 6 about a second rotation axis S2. The first rotation axis S1 extends horizontally or substantially horizontally at or near the bottom of the third solar panel 5, in particular at the bottom of the frame 50 of the third solar panel 5. The second rotation axis S2 extends horizontally or substantially horizontally at or near the top of the third solar panel 5, in particular at the top of the frame 50 of the third solar panel 5. The first rotation axis S1 and the second rotation axis S2 are thus spaced apart and/or located on opposite sides of the third solar panel 5. The first rotation axis S1 and the second rotation axis S2 are mutually parallel or substantially parallel.

Each solar panel 3, 4, 5 further has a center of gravity, of which only the centers of gravity of the first solar panel 3 and the second solar panel 4 are schematically shown in figure 4 with symbols G1 and G2, respectively. The first solar panel 3 differs from the other solar panels 4, 5 in that it is provided with a crank member 33 projecting from the frame 30 at a side of the first rotation axis S1 opposite to the first center of gravity G1.

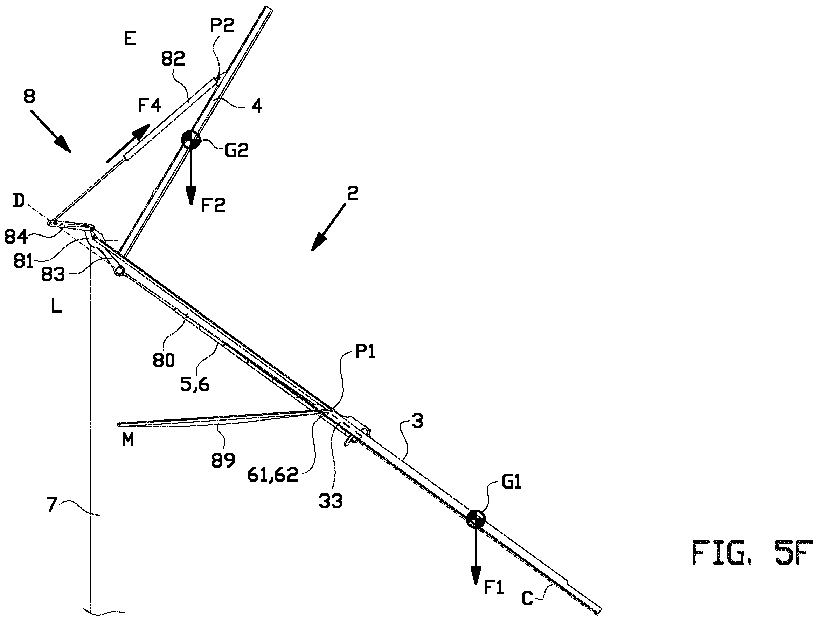

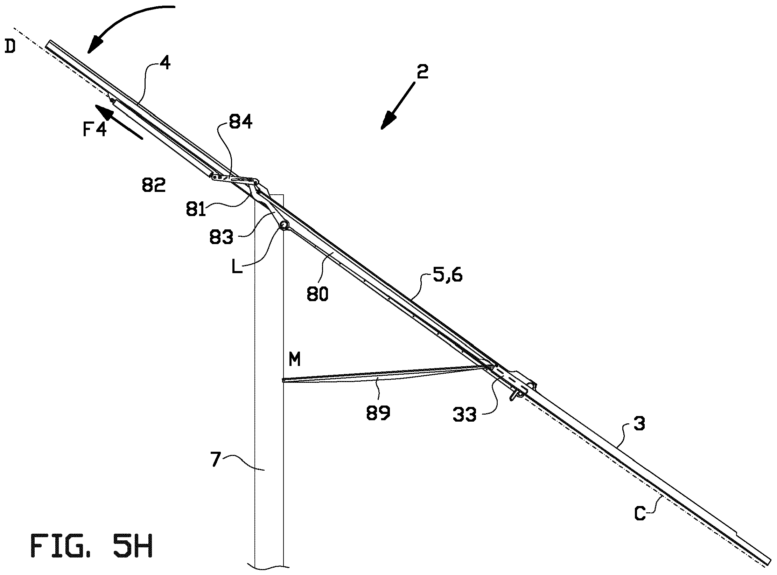

As shown in figure 4, the solar panel assembly 2 is provided with a deployment mechanism 8 for deploying the solar panels 3, 4, 5 of the solar panel assembly 2. As shown in figures 5A-5H, the first solar panel 3 is deployable from a first base position A (figure 5A) at the third solar panel 5 into a first deployment position C below the third solar panel 5 (figure 5F) by rotation with respect to the third solar panel 5 about the first rotation axis S1. The second solar panel 4 is deployable from a second base position B (figure 5A) at the third solar panel 5 into a second deployment position D above the third solar panel 5 (figure 5H) by rotation with respect to the third solar panel 5 about the second rotation axis S2. An advantage of the present invention is that the first solar panel 3 is arranged to be deployed from the first base position A towards the first deployment position C at least partially under the influence of a first gravitational force F1 acting on the first solar panel 3 from its center of gravity G1. The deployment mechanism 8 connects the first solar panel 3 to the second solar panel 4 to at least partially convert the first gravitational force F1 into a deployment force F3 assisting and/or driving the rotation of the second solar panel 4 from the second base position B towards and/or into the second deployment position D.

The base 6, in this exemplary embodiment in the form of the third solar panel 5, is provided with a stopping member 61, e.g. a flange 62 at the side of the frame 50 of the third solar panel 5, that is arranged to come into abutment with the first solar panel 3, in particular with the crank member 33 thereof, to limit, hold or retain the first solar panel 3 in the first deployment position C and/or to prevent further rotation of the first solar panel 3 under the influence of the gravitational force G1. In the first deployment position C, as shown in figure 4, the main surface 32 of the first solar panel 3 is parallel, substantially parallel, coplanar or substantially coplanar to the main surface 52 of the third solar panel 5.

In order to convert the gravitational force G1 of the first solar panel 3 into the deployment force F3 acting on the second solar panel 4, the deployment mechanism 8 comprises a connecting member 80 that mechanically connects the first solar panel 3 to the second solar panel 4. In this exemplary embodiment, the connecting member 80 is formed as a rigid rod or bar. The connecting member 80 extends from a first coupling position P1 at the first solar panel 3 towards a second coupling position P2 at the second solar panel 4. The first coupling position P1 and the second coupling position P2 are spaced apart from the first rotation axis S1 and the second rotation axis S2, respectively, to allow for the deployment mechanism 8 to convert the moment of force of the first solar panel 3, via a displacement of the connecting member 80, into a moment of force that is exerted on the second solar panel 4.

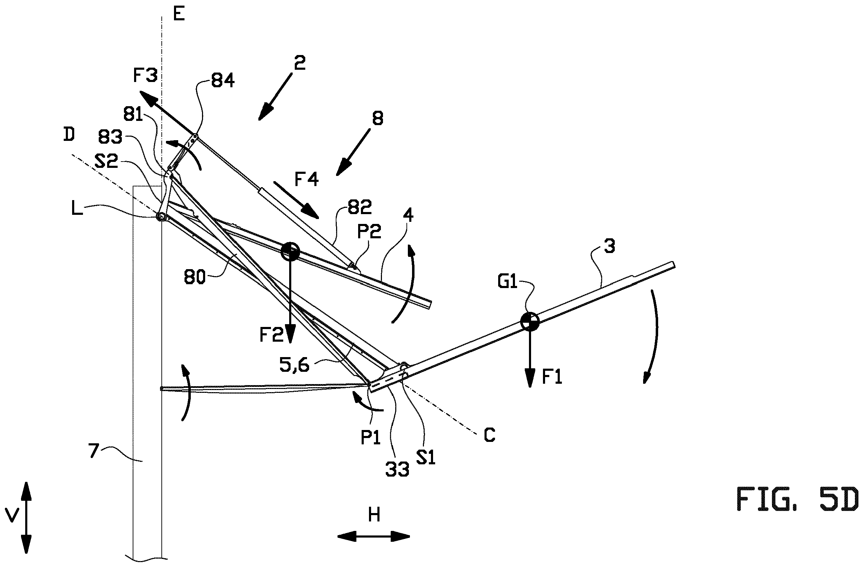

In particular, as best seen in figure 5D, the connecting member 80 is connected to the first solar panel 3 at the first coupling position P1 at a side of the first rotation axis S1 opposite to the center of gravity G1 of the first solar panel 3. Hence, a downward rotation of the first solar panel 3 about the first rotation axis S1 under the influence of the gravitational force F1 acting on said first solar panel 3 causes a displacement of the connecting member 80 in an upward direction, towards the second solar panel 4. Meanwhile, the deployment mechanism 80 is operationally connected to the second solar panel 4 at the second coupling position P2 at the same side of the second rotation axis S2 as the center of gravity G2 of the second solar panel 4. As a result, the upward displacement of the connecting member 80 is converted by the deployment mechanism 8 in the deployment force F3 acting in an upward direction onto the second solar panel 4 and thereby assisting and/or driving its upward rotation towards and/or into the second deployment position D.

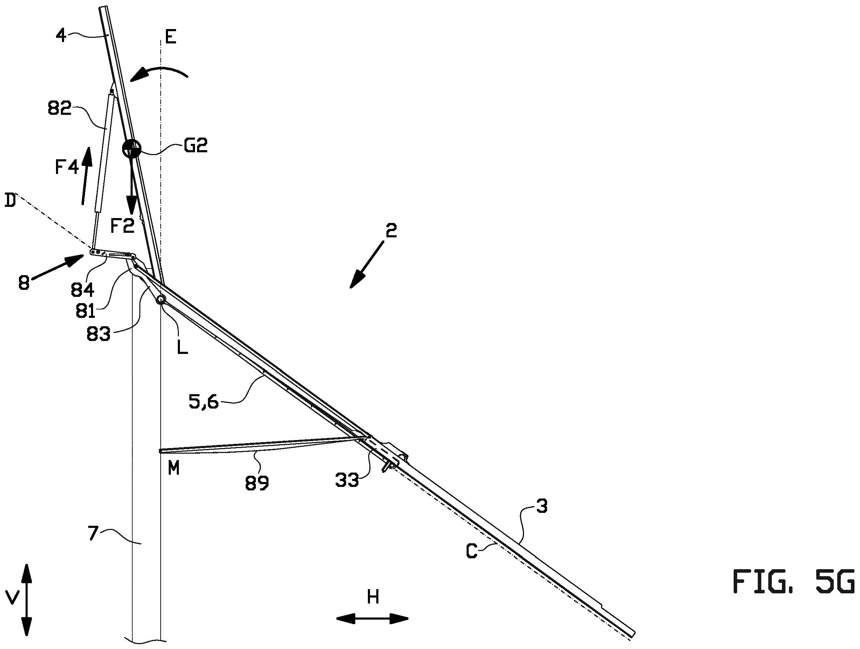

As shown in figure 5D, the connecting member 80 is coupled to the second solar panel 4 via a lever 81 and a buffer member 82. The buffer member 82 has a length that is variable within a buffer range. In particular, the buffer member 82 is compressible or contractible to a lower limit of the buffer range, and expandable or extendible to an upper limit of the buffer range. In this exemplary embodiment, the buffer member 82 is formed by an accumulator, in particular a pneumatic accumulator or a gas spring. The buffer member 82 can accumulate and/or store energy that is used later on in the deployment. The buffer member 82 may further dampen and/or guide the rotation of the second solar panel 4 during its deployment, as schematically illustrated by arrow F4 in figures 5G and 5H. Furthermore, within the buffer range, the buffer member 82 allows for movement of the second solar panel 4 independent of the first solar panel 3. The practical advantages of the buffer member 82 will become apparent in the part of the description that relates to the consecutive steps of deploying the solar panel assembly 2.

The lever 81 is rotatable about a lever axis L parallel to, near or at the second rotation axis S2. The lever 81 acts as a transmission between the connecting member 80 and the buffer member 82. The lever 81 converts the displacements of the connecting member 80 into an extension and/or contraction of the buffer member 82. Once the buffer member 82 reaches the upper or lower limit of its buffer range, the buffer member 82 directly transmits the movements of the lever 81 onto the second solar panel 4. In this exemplary embodiment, the lever 81 comprises a first lever section 83 that is rotatably connected to the base 6 at the lever axis L and a second lever section 84 that is rotatably connected to the distal end of the first lever section 83 with respect to the lever axis L. The connecting member 80 connects to the first lever section 83 at a distance spaced apart from the lever axis L. The buffer member 82 connects to the second lever section 84 at a distance spaced apart from the connection of the connecting member 80 to the first lever section 83. The second lever section 84 prevents a dead center situation of the buffer member 82 with respect to the second solar panel 4.

As shown in figure 5D, the deployment mechanism 5 further comprises an angle beam 89 that controls and/or sets the angle or slope of the base 6 during the deployment of the solar panel assembly 2. In this exemplary embodiment, the angle beam 89 forms a part of the deployment mechanism and automatically controls the angle of the base 6 as a result of the rotation of the first solar panel 3 towards the first deployment position C. One end of the angle beam 89 is connected to and rotatable about an angle axis M at the support 7, while the other end is connected to the crank member 33 of the first solar panel 3, at or near the first coupling position P1.

Figures 5A-5H show the consecutive steps of deploying the aforementioned solar panel assembly 2. It will be clear that the same steps apply to the return of the solar panel assembly 2 to its storage position, yet in reverse order. For reasons of conciseness, only the deployment is described in detail.

Figure 5A shows the initial situation prior to deployment, based on the folded out position of the sets 21-25 of solar panel assemblies 2 as shown in figure 3. The solar panels 3, 4, 5 of the solar panel assembly 2 form a compact package. The solar panels 3, 4, 5 extend mutually parallel in the vertical or substantially vertical direction V along the support 7. The first solar panel 3 is located in the first base position A on the outside or front of the compact package. The third solar panel 5, acting also as the base 6 for the other solar panels 3, 4, is located at the back of the compact package with respect to the support 7. The second solar panel 4 is located or sandwiched between the first solar panel 3 and the third solar panel 5 in the second base position B. The solar panel assembly 2 is ready for deployment.

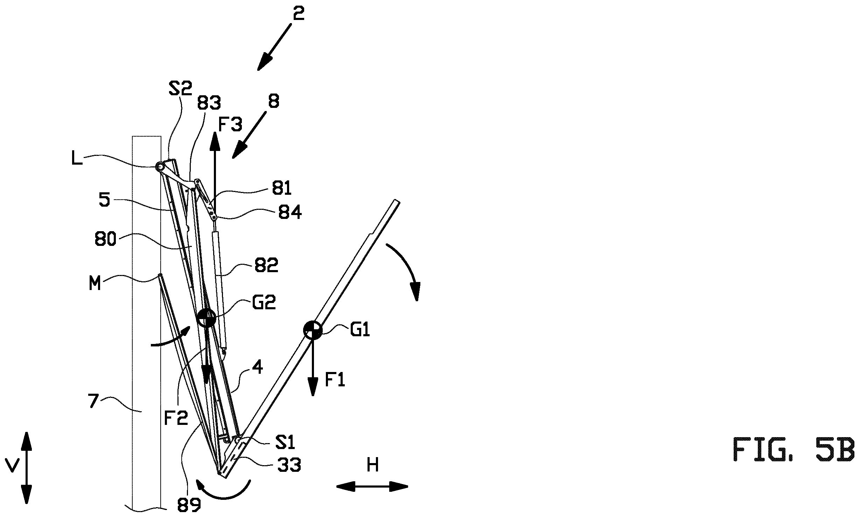

Figure 5B shows the first step of the deployment, in which the first solar panel 3 is allowed to drop or rotate downwards about the first rotation axis S1 under the influence of the gravitational force F1 acting on the first solar panel 3. In the initial upright position as shown in figure 5A, the center of gravity G1 of the first solar panel 3 is located vertically above the first rotation axis S1. Thus, in order to arrive at the situation as shown in figure 5B, one might need to manually assist the first solar panel 3 out of its vertically upright first base position A into the position as shown in figure 5B. This requires very little effort as the weight of the first solar panel 3 will contribute to the motion. For this purpose, the first solar panel 3 may be provided with a grip or rope (not shown) to manually pull it down.

In figure 5B, the deployment mechanism 8 becomes visible. In particular, it can be observed that the buffer member 82, in the initial stages of deployment, is fully contracted at the lower limit of the buffer range. In this state, the buffer member 82 has stored pneumatic energy which biases the buffer member 82 to extend when it is allowed to do so. As soon as the first solar panel 3 starts to rotate downwards, its crank member 33 actuates a rotation of the angle beam 89 about the angle axis M at the support 7, thereby forcing the base member 6 outwards into an increasingly angled or sloped orientation with respect to the base 7. Meanwhile the same crank member 33 displaces the connecting member 80 upwards, thereby forcing the lever 81 in an upwards rotation about lever axis L. The rotation of the lever 81 exerts a pulling deployment force F3 onto the buffer member 82 and allows said buffer member 82 to expand towards the upper limit of the buffer range. While the buffer member 82 expands, the deployment force F3 is not yet directly exerted on the second solar panel 4. This is convenient as - in the initial stages of the deployment - the first solar panel 3 still blocks or interferes with the rotation path of the second solar panel 4 about the second rotation axis S2. Instead, the expansion of the buffer member 82 helps the deployment of the solar panel assembly 2 already in the early stages. The expansion of the buffer member 82 is converted via the lever 81 into an upward force acting on the connecting member 80, which contributes to the upward movement of said connecting member 80.

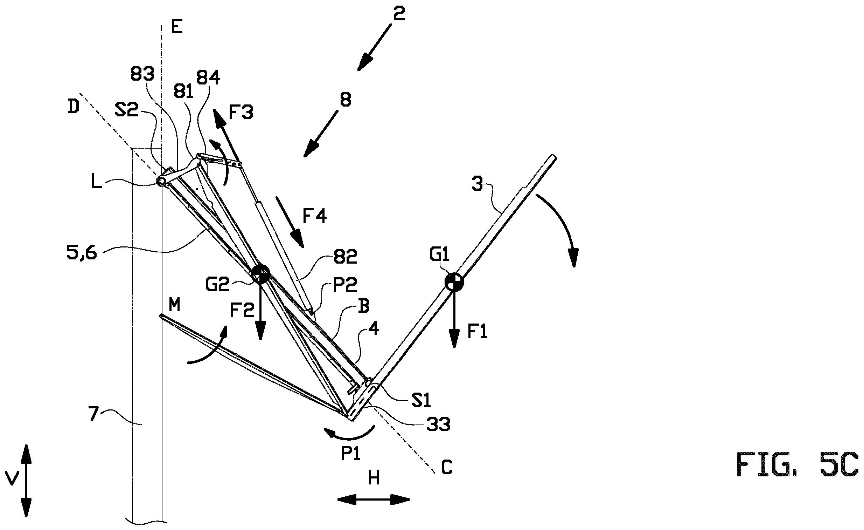

Figure 5C shows a subsequent step of the deployment in which the first solar panel 3 is rotated further downwards under the influence of the gravitational force F1 while the connecting member 80 is displaced further upwards by the crank member 33 of the first solar panel 3. The buffer member 82 has not yet reached the upper limit of the buffer range and does therefore not yet transmit the deployment force F3 onto the second solar panel 4, the latter remaining in place in the second base position B. The buffer member 82 however continues to contribute to the deployment of the solar panel assembly 2 in the aforementioned manner.

Figure 5D shows a step of the deployment in which the first solar panel 3 has rotated further under the influence of its gravitation force F1 towards the first deployment position C. The buffer member 82 has now reached the upper limit of its buffer range and has started to transmit the deployment force F3 directly onto the second solar panel 4. In essence, the buffer member 82 now acts as a rigid member or a pulling bar with a fixed length. As a result, the second solar panel 4 is rotated upwards out of the first base position B, assisted and/or driven by the deployment force F3 as a result of the gravitational force F1 acting on the first solar panel 3.

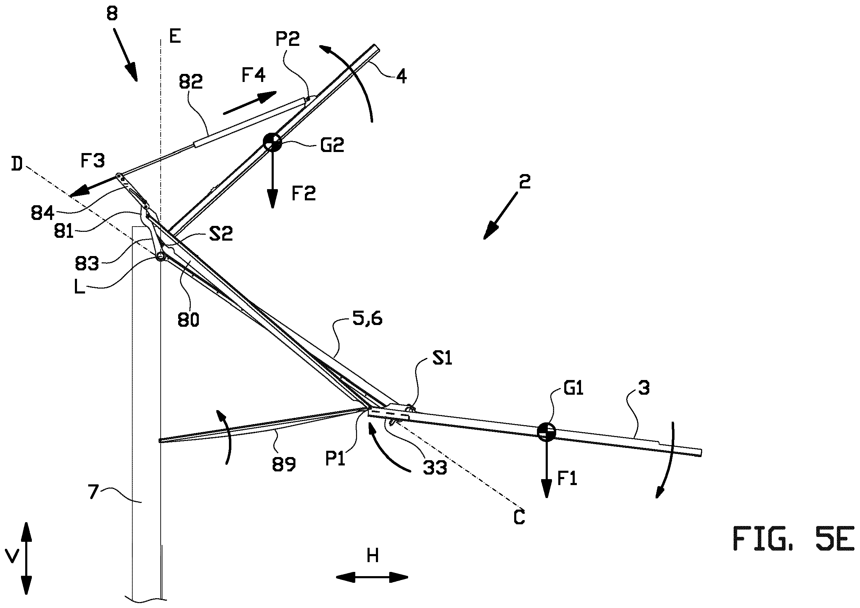

Figure 5E shows a subsequent step of the deployment in which the first solar panel 3 is approaching the first deployment position C below the base 6 while the second solar panel 4 is rotated further upwards towards the second deployment position D above the base 6, still assisted and/or driven by the deployment force F3 as a result of the gravitational force F1 acting on the first solar panel 3.

Figure 5F shows a subsequent step of the deployment in which the first solar panel 3 has reached the first deployment position C below the base 6. The first solar panel 3 is now parallel, substantially parallel, coplanar or substantially coplanar to the third solar panel 5. The angle beam 89 has been rotated about the angle axis M to force the base 6 into its intended angle or slope with respect to the support 7. The angle beam 89 is retained in said position by the crank member 33 of the first solar panel 3. The crank member 33 of the first solar panel 3 is now in abutment with the stopping member 61 and/or the flange 62 at the base 6 which prevents further downward rotation of the first solar panel 3. The second solar panel 4 is no longer actively driven by the gravitational force F1 acting on the first solar panel 3. The second solar panel 4 has been moved under the influence of the deployment force F3 into a position in which the center of gravity G2 of the second solar panel 4 is almost directly vertically above the second rotation axis S2, as schematically indicated with the dashed line E. This is also known as a 'dead center' position E. Once the second solar panel 4 is moved through said dead center position E, the gravitational force F2 acting on the second solar panel 4 will assist the further rotation during its descend towards the second deployment position D.

In this exemplary embodiment, the second solar panel 4 is provided with a grip or a rope (not shown) that allows for manually pulling of the second solar panel 4 through the dead center position E. This requires very little effort as the weight of the second solar panel 4 is almost completely support by the support 7. In an alternative embodiment, the buffer member 82 may assist the rotation of the second solar panel 4 through the dead center position, e.g. by a build-up of underpressure that causes the buffer member 82 to contract when the force of the underpressure exceeds the force component of the weight of the second solar panel 4 acting on the buffer member 82. In a further alternative embodiment, separate drive means may be provided to actively drive the second solar panel 4 in rotation through the dead center position E.

Figure 5G shows a subsequent step of the deployment in which the second solar panel 4 has been moved through the dead center position E and starts to drop and/or rotate towards the second deployment position D under the influence of the gravitation force F2 acting on the second solar panel 4. The buffer range of the buffer member 82 has provided the second solar panel 4 with the necessary degrees of freedom to rotate through the dead center position E independently of the now stationary first solar panel 3. The buffer member 82 now starts to act as a dampener, resisting the downward rotation of the second solar panel 4 by exerting a dampening force F4 onto the second solar panel 4 in a direction opposite to its gravitational force F2.

Figure 5H finally shows the second solar panel 4 after it has arrived in the second deployment position D above the base 6. The first solar panel 3, the second solar panel 4 and the third solar panel 5 are now all parallel, substantially parallel, coplanar or substantially coplanar. All solar panels 3, 4, 5 furthermore extend under the same oblique angle or slope as set by the angle beam 89. The buffer member 82 has been fully contracted by the downward rotation of the second solar panel 4 and acts as a stop for the second solar panel 4. The solar panel assembly 2 is now ready for use in combination with the generator 17 and/or the batteries 18 as shown in figure 1 to generate electrical power from sunlight.

The aforementioned deployment steps are repeated for each of the solar panel assemblies 2 within the sets 21-25 to ultimately arrive at the fully deployed mobile unit 1 as shown in figures 6 and 7.

To rotate the second solar panel 4 back from the second deployment position D towards the second base position B, the second solar panel 4 can be manually rotated through the dead center position E. The rotation can be assisted by the expansion of the buffer member 82 and/or further driving members (not shown). During rotation of the first solar panel 3 and the second solar panel 4 back towards their respective base positions A, B, hence during the aforementioned steps in reverse order, the buffer member 82 will again resist the descend of the second solar panel 4, but now during its descend from the dead center position E towards the second base position B. As the buffer member 82 is linked to the first solar panel 3 via the deployment mechanism 8, the descend of the second solar panel 4 is counteracted by the gravitational force F1 of the first solar panel 3. Since both solar panels 3, 4 are of substantially equal weight, they will almost balance out, which prevents that the second solar panel 4 comes down uncontrollably. When the second solar panel 4 is in the second base position B, the buffer member 82 has not yet been fully contracted, similar to the situation as shown in figure 5C. Hence, the buffer member 82 continues to provide a dampening force, yet now acting on the lower of the base member 6 towards the support 7. In the meantime, the first solar panel 3 can be rotated upwards into the first base position A. During said rotation, the angle beam 89 is allowed to rotate downwards about the angle axis M, thereby returning the base 6 to its initial vertical orientation as shown in figure 5A. The simultaneous lowering of the base 6 may assist the upward rotation of the first solar panel 3.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

## Claims

1. Solar panel assembly (2) comprising a first solar panel (3), a second solar panel (4) and a base (6) for supporting the first solar panel (3) and the second solar panel (4), wherein the first solar panel (3) is deployable from a first base position (A) at the base (6) into a first deployment position (C) below the base (6) by rotation with respect to the base (6) about a first rotation axis (S1), wherein the second solar panel (4) is deployable from a second base position (B) at the base (6) into a second deployment position (D) above the base (6) by rotation with respect to the base (6) about a second rotation axis (S2), wherein the first solar panel (3) is arranged to be deployed from the first base position (A) towards the first deployment position (C) at least partially under the influence of a first gravitational force (F1) acting on the first solar panel (3), **characterized in that** the solar panel assembly (2) is provided with a deployment mechanism (8) that connects the first solar panel (3) to the second solar panel (4) to convert the first gravitational force (F1) into a deployment force (F3) assisting the rotation of the second solar panel (4) from the second base position (B) towards the second deployment position (D).

2. Solar panel assembly (2) according to claim 1, wherein the deployment mechanism (8) is coupled to the first solar panel (3) and the second solar panel (4) at a first coupling position (P1) and a second coupling position (P2), respectively, wherein the first coupling position (P1) and the second coupling position (P2) are spaced apart from the first rotation axis (S1) and the second rotation axis (S2), respectively, preferably wherein the first solar panel (3) has a center of gravity (G1) that is spaced apart from the first rotation axis (S1), wherein the first coupling position (P1) is at a side of the first rotation axis (S1) opposite to the center of gravity (G1) of the first solar panel (3),
preferably wherein the second solar panel (4) has a center of gravity (G2) that is spaced apart from the second rotation axis (S2), wherein the second coupling position (P2) is at the same side of the second rotation axis (S2) as the center of gravity (G2)of the second solar panel (4),
preferably wherein the second solar panel (4) during the rotation from the second base position (B) towards the second deployment position (D) moves through a dead center position (E) in which its center of gravity (G2) is vertically above the second rotation axis (S2), wherein the deployment force (F3) is arranged for assisting the rotation of the second solar panel (4) from the second base position (B) towards the dead center position (E).

3. Solar panel assembly (2) according to claim 2, wherein the deployment mechanism (8) comprises a buffer member (82) that is coupled to the second solar panel (4) at the second coupling position (P2) and a connecting member (80) that is coupled to the first solar panel (3) at the first coupling position (P1), wherein the connecting member (80) is linked to the buffer member (82) for transmitting the deployment force (F3) from the first solar panel (3) to the second solar panel (4), wherein the buffer member (82) has a length that is variable within a buffer range, wherein the second solar panel (4) is rotatable through its dead center position within the buffer range of the buffer member (82).

4. Solar panel assembly (2) according to claim 3, wherein the deployment mechanism (8) further comprises a lever (81) that links the connecting member (80) to the buffer member (82), wherein the lever (81) is rotatable with respect to the second solar panel (4) about a lever axis (L), wherein the connecting member (80) and the buffer member (82) are coupled to the lever (81) on the same side of and spaced apart from the lever axis (L),
preferably wherein the lever axis (L) is parallel or substantially parallel to the second rotation axis (S2),
preferably wherein the lever (81) is arranged to extend to above the second solar panel (4) when the second solar panel (4) is in the second base position (B), wherein the buffer member (82) is arranged to transmit the deployment force (F3) onto the second solar panel (4) when the buffer member (82) is at or near the upper end of the buffer range,
preferably wherein the lever (81) comprises a first lever section (83) that is rotatable with respect to the lever axis (L) and a second lever section (84) that is hingably connected to the first lever section (83) at the side of the first lever section (83) facing away from the lever axis (L), wherein the connecting member (80) is coupled to the first lever section (83) and the buffer member (82) is coupled to the second lever section (84).

5. Solar panel assembly (2) according to claim 3 or 4, wherein the second solar panel (4) is arranged to be deployed towards the second deployment position (D) at least partially under the influence of a second gravitational force (F2) acting on the second solar panel (4), wherein the buffer member (82) is arranged to at least partially absorb the second gravitational force (F2), and/or
wherein the buffer member (82) is an accumulator, preferably a pneumatic accumulator and most preferably a gas spring.

6. Solar panel assembly (2) according to any one of the preceding claims, wherein the solar panel assembly (2) is provided with a stopping member (61) that stops the first solar panel (3) in the first deployment position (C), wherein the deployment mechanism (8) is arranged to retain the second solar panel (4) in the second deployment position (D) when the first solar panel (3) is stopped by the stopping member (61) in the first deployment position (C), and/or
wherein the second solar panel (4) in the second base position (B) is arranged to extend between the base (6) and the first solar panel (3) in the first base position (A), and/or
wherein the base (6) comprises a third solar panel (5) extending between first rotation axis (S1) and the second rotation axis (S2), and/or
wherein the solar panels are arranged to be parallel, substantially parallel, coplanar or substantially coplanar when the first solar panel (3) and the second solar panel (4) are deployed into the first deployment position (C) and the second deployment position (D), respectively, and/or
wherein the solar panel assembly (2) further comprises a support (7) and an angle beam (89) for supporting the base (6) under an oblique angle with respect to the support (7).

7. Solar panel assembly (2) according to any one of the preceding claims, wherein the first rotation axis (S1) and the second rotation axis (S2) are spaced apart, and/or
wherein the first rotation axis (S1) and the second rotation axis (S2) are parallel or substantially parallel, and/or
wherein the first rotation axis (S1) and the second rotation axis (S2) are horizontal or substantially horizontal.

8. Mobile unit comprising one or more of the solar panel assemblies according to any one of the preceding claims and a container (10) for storing said one or more solar panel assemblies (2) in a storage position.

9. Mobile unit according to claim 8, wherein the mobile unit comprises a plurality of the solar panel assemblies (2), wherein at least some of the solar panel assemblies are grouped into a first group (26) that is arranged to fold out of the container towards a folded out position about a first vertical fold axis at a first side of the container (10),
preferably wherein the first group (26) comprises at least a first set (21) and a second set (22) of one or more solar panel assemblies (2), wherein the first set is arranged to fold with respect to the container about the first vertical fold axis (K1) and wherein the second set (22) is arranged to fold with respect to the first set about a second vertical fold axis (K2) at a side of the first set opposite to the first fold axis (K1),
preferably wherein the first group further comprises a third set (23) of one or more solar panel assemblies (2), wherein the third set is arranged to fold with respect to the first set about a third vertical fold axis (K3) at the same side of the first set as the first fold axis,
preferably wherein the first set (21) is arranged to fold away from the container (10) towards the folded out position, while the third set (23) is arranged to fold back towards the container (10) with respect to the first set (21) .

10. Mobile unit according to claim 9, wherein at least some of the solar panel assemblies are grouped into a second group (27) that is arranged to fold out of the container towards a folded out position about a fourth vertical fold axis (K4) at a second side of the container (10), opposite to the first side,
preferably wherein the second group (27) comprises at least a fourth set (24) and a fifth set (25) of one or more solar panel assemblies (2), wherein the fourth set (24) is arranged to fold with respect to the container (10) about the fourth vertical fold axis (K4) and wherein the fifth set (25) is arranged to fold with respect to the fourth set (24) about a fifth vertical fold axis (K5) at a side of the fourth set (24) opposite to the fourth fold axis (K4),
preferably wherein the container (10) has an open third side (16) between the first side (13) and the second side (14) to allow the first group (26) and the second group (27) to fold in and out of the container (10), wherein the fourth fold axis (K4) is spaced apart from the open third side (16) over a hinge distance and wherein the second group (27) is spaced apart from the fourth fold axis (K4) in a direction away from the open third side (16) over a spacing distance, wherein the spacing distance is equal to or larger than the hinge distance,
preferably wherein the second group (27), in the storage position, is recessed from the open third side (16) over a distance that is equal to or larger than the space consumed by the first group (26) in said storage position.

11. Mobile unit according to claim 9 or 10, wherein the mobile unit is provided with one or more supports (7) for supporting the bases (6) of each of the solar panel assemblies in the folded out position,
preferably wherein the one or more supports (7) are arranged for supporting the full weight of the one or more solar panel assemblies (2) with respect to the container (10),
preferably wherein the container (10) is arranged to be placed onto a ground surface the one or more supports (7) are arranged for supporting the one or more solar panel assemblies (2) with a ground clearance above the ground surface.

12. Method for deploying a solar panel assembly (2) according to claim 1, wherein the method comprises the steps of:
deploying the first solar panel (3) from the first base position (A) towards the first deployment position (C) at least partially under the influence of a first gravitational force (F1) acting on the first solar panel (3); and
converting the first gravitational force (F1) with the deployment mechanism (8) into a deployment force (F3) assisting the rotation of the second solar panel (4) from the second base position (B) towards the second deployment position (D).

13. Method according to claim 12, wherein the second solar panel (4) during the rotation from the second base position (B) towards the second deployment position (D) moves through a dead center position in which its center of gravity is vertically above the second rotation axis (S2), wherein the deployment force (F3) is arranged for assisting the rotation of the second solar panel (4) from the second base position (B) towards the dead center position,
preferably wherein the method further comprises the step of pulling the second solar panel (4) through the dead center position towards the dead center position,
preferably wherein the second solar panel (4) deployed from the dead center position towards the second deployment position (D) at least partially under the influence of a second gravitational force (F2) acting on the second solar panel (4), wherein the method comprises the step of providing a buffer member (82) that at least partially absorbs the second gravitational force (F2).

14. Method according to claim 12 or 13, wherein the second solar panel (4) in the second base position (B) extends between the base (6) and the first solar panel (3) in the first base position (A), wherein the first solar panel (3) is rotated towards the first deployment position (C) prior to the second solar panel (4) solar panel being rotated towards the second deployment position (D).

15. Method according to claim 12, 13 or 14, wherein the method comprises the step of providing a mobile unit comprising a plurality of the solar panel assemblies (2) and a container (10) for storing the plurality of solar panel assemblies (2), wherein at least some of the solar panel assemblies are grouped into a first group (26) that folds out of the container (10) towards a folded out position about a first vertical fold axis (K1) at a first side of the container (10), wherein the first group (26) comprises at least a first set (21) and a second set (22) of one or more solar panel assemblies (2), wherein the first set (21) folds with respect to the container (10) about the first vertical fold axis (K1) and wherein the second set (22) folds with respect to the first set (21) about a second vertical fold axis (K2) at a side of the first set (21) opposite to the first fold axis (K1), wherein the first group (26) further comprises a third set (23) of one or more solar panel assemblies (2), wherein the third set (23)folds with respect to the first set (21) about a third vertical fold axis (K3) at the same side of the first set (21) as the first fold axis (K1), wherein the method further comprises the steps of; folding the first set (21) away from the container (10) towards the folded out position; and folding the third set (23) back towards the container (10) with respect to the first set (21),
preferably wherein the second set (22) is folded towards the folded out position after the third set (23) has been folded back.

## Patentansprüche

1. Solarmodul-Anordnung (2), umfassend ein erstes Solarmodul (3), ein zweites Solarmodul (4) und eine Basis (6) zum Tragen des ersten Solarmoduls (3) und des zweiten Solarmoduls (4), wobei das erste Solarmodul (3) aus einer ersten Basisposition (A) an der Basis (6) in eine erste Ausfahrposition (C) unterhalb der Basis (6) durch Rotation bezüglich der Basis (6) um eine erste Rotationsachse (S1) ausfahrbar ist, wobei das zweite Solarmodul (4) von einer zweiten Basisposition (B) an der Basis (6) in eine zweite Ausfahrposition (D) oberhalb der Basis (6) durch Rotation bezüglich der Basis (6) um eine zweite Rotationsachse (S2) ausfahrbar ist, wobei das erste Solarmodul (3) dazu eingerichtet ist, von der ersten Basisposition (A) in Richtung der ersten Ausfahrposition (C) wenigstens teilweise unter dem Einfluss einer ersten Gravitationskraft (F1) ausgefahren zu werden, welche auf das erste Solarmodul (3) wirkt, **dadurch gekennzeichnet, dass** die Solarmodul-Anordnung (2) mit einem Ausfahrmechanismus (8) versehen ist, welcher das erste Solarmodul (3) mit dem zweiten Solarmodul (4) dazu verbindet, die erste Gravitationskraft (F1) in eine Ausfahrkraft (F3) umzuwandeln, welche die Rotation des zweiten Solarmoduls (4) von der zweiten Basisposition (B) in Richtung der zweiten Ausfahrposition (D) unterstützt.

2. Solarmodul-Anordnung (2) nach Anspruch 1, wobei der Ausfahrmechanismus (8) mit dem ersten Solarmodul (3) und dem zweiten Solarmodul (4) an einer ersten Kopplungsposition (P1) bzw. einer zweiten Kopplungsposition (P2) gekoppelt ist, wobei die erste Kopplungsposition (P1) und die zweite Kopplungsposition (P2) von der ersten Rotationsachse (S1) bzw. der zweiten Rotationsachse (S2) beabstandet sind, wobei vorzugsweise das erste Solarmodul (3) einen Schwerpunkt (G1) aufweist, welcher von der ersten Rotationsachse (S1) beabstandet ist, wobei die erste Kopplungsposition (P1) an einer Seite der ersten Rotationsachse (S1) gegenüber dem Schwerpunkt (G1) des ersten Solarmoduls (3) liegt,
wobei vorzugsweise das zweite Solarmodul (4) einen Schwerpunkt (G2) aufweist, welcher von der zweiten Rotationsachse (S2) beabstandet ist, wobei die zweite Kopplungsposition (P2) an derselben Seite der zweiten Rotationsachse (S2) liegt wie der Schwerpunkt (G2) des zweiten Solarmoduls (4),
wobei sich vorzugsweise das zweite Solarmodul (4) während der Rotation von der zweiten Basisposition (B) in Richtung der zweiten Ausfahrposition (D) durch eine Totpunkt-Position (E) bewegt, in welcher sein Schwerpunkt (G2) vertikal oberhalb der zweiten Rotationsachse (S2) liegt, wobei die Ausfahrkraft (F3) dazu eingerichtet ist, die Rotation des zweiten Solarmoduls (4) von der zweiten Basisposition (B) in Richtung der Totpunkt-Position (E) zu unterstützen.

3. Solarmodul-Anordnung (2) nach Anspruch 2, wobei der Ausfahrmechanismus (8) ein Pufferelement (82), welches mit dem zweiten Solarmodul (4) an der zweiten Kopplungsposition (P2) gekoppelt ist, und ein Verbindungselement (80) umfasst, welches mit dem ersten Solarmodul (3) an der ersten Kopplungsposition (P1) gekoppelt ist, wobei das Verbindungselement (80) mit dem Pufferelement (82) zum Übertragen der Ausfahrkraft (F3) von dem ersten Solarmodul (3) zu dem zweiten Solarmodul (4) verbunden ist, wobei das Pufferelement (82) eine Länge aufweist, welche variabel innerhalb eines Pufferbereichs ist, wobei das zweite Solarmodul (4) durch seine Totpunkt-Position innerhalb des Pufferbereichs des Pufferelements (82) rotierbar ist.

4. Solarmodul-Anordnung (2) nach Anspruch 3, wobei der Ausfahrmechanismus (8) ferner einen Hebel (81) umfasst, welcher das Verbindungselement (80) mit dem Pufferelement (82) verbindet, wobei der Hebel (81) bezüglich des zweiten Solarmoduls (4) um eine Hebelachse (L) rotierbar ist, wobei das Verbindungselement (80) und das Pufferelement (82) mit dem Hebel (81) an derselben Seite und beabstandet von der Hebelachse (L) gekoppelt sind, wobei vorzugsweise die Hebelachse (L) parallel oder im Wesentlichen parallel zu der zweiten Rotationsachse (S2) ist,
wobei vorzugsweise der Hebel (81) dazu eingerichtet ist, sich oberhalb des zweiten Solarmoduls (4) zu erstrecken, wenn das zweite Solarmodul (4) in der zweiten Basisposition (B) ist, wobei das Pufferelement (82) dazu eingerichtet ist, die Ausfahrkraft (F3) auf das zweite Solarmodul (4) zu übertragen, wenn das Pufferelement (82) an oder nahe dem oberen Ende des Pufferbereichs ist, wobei vorzugsweise der Hebel (81) einen ersten Hebelabschnitt (83), welcher rotierbar bezüglich der Hebelachse (L) ist, und einen zweiten Hebelabschnitt (84) umfasst, welcher gelenkig mit dem ersten Hebelabschnitt (83) an der Seite des ersten Hebelabschnitts (83) verbunden ist, welche weg von der Hebelachse (L) weist, wobei das Verbindungselement (80) mit dem ersten Hebelabschnitt (83) gekoppelt ist und das Pufferelement (82) mit dem zweiten Hebelabschnitt (84) gekoppelt ist.

5. Solarmodul-Anordnung (2) nach Anspruch 3 oder 4, wobei das zweite Solarmodul (4) dazu eingerichtet ist, in Richtung der zweiten Ausfahrposition (D) wenigstens teilweise unter dem Einfluss einer zweiten Gravitationskraft (F2) ausgefahren zu werden, welche auf das zweite Solarmodul (4) wirkt, wobei das Pufferelement (82) dazu eingerichtet ist, wenigstens teilweise die zweite Gravitationskraft (F2) zu absorbieren, und/oder
wobei das Pufferelement (82) ein Akkumulator ist, vorzugsweise ein pneumatischer Akkumulator oder am meisten vorzugsweise eine Gasfeder.

6. Solarmodul-Anordnung (2) nach einem der vorhergehenden Ansprüche, wobei die Solarmodul-Anordnung (2) mit einem Stop-Element (61) versehen ist, welches das erste Solarmodul (3) in der ersten Ausfahrposition (C) stoppt, wobei der Ausfahrmechanismus (8) dazu eingerichtet ist, das zweite Solarmodul (4) in der zweiten Ausfahrposition (D) zu halten, wenn das erste Solarmodul (3) von dem Stop-Element (61) in der ersten Ausfahrposition (C) gestoppt wird, und/oder
wobei das zweite Solarmodul (4) in der zweiten Basisposition (B) dazu eingerichtet ist, sich zwischen der Basis (6) und dem ersten Solarmodul (3) in der ersten Basisposition (A) zu erstrecken, und/oder
wobei die Basis (6) ein drittes Solarmodul (5) umfasst, welches sich zwischen der ersten Rotationsachse (S1) und der zweiten Rotationsachse (S2) erstreckt, und/oder
wobei die Solarmodule dazu eingerichtet sind, parallel, im Wesentlichen parallel, koplanar oder um Wesentlichen koplanar zu sein, wenn das erste Solarmodul (3) und das zweite Solarmodul (4) in die erste Ausfahrposition (C) bzw. die zweite Ausfahrposition (D) ausgefahren sind, und/oder wobei die Solarmodul-Anordnung (2) ferner einen Träger (7) und eine Winkelstrebe (89) zum Tragen der Basis (6) unter einem schiefen Winkel bezüglich des Trägers (7) umfasst.

7. Solarmodul-Anordnung (2) nach einem der vorhergehenden Ansprüche, wobei die erste Rotationsachse (S1) und die zweite Rotationsachse (S2) beabstandet sind, und/oder
wobei die erste Rotationsachse (S1) und die zweite Rotationsachse (S2) parallel oder im Wesentlichen parallel sind, und/oder
wobei die erste Rotationsachse (S1) und die zweite Rotationsachse (S2) horizontal oder im Wesentlichen horizontal sind.

8. Mobile Einheit, umfassend eine oder mehrere der Solarmodul-Anordnungen nach einem der vorhergehenden Ansprüche sowie einen Behälter (10) zum Aufnehmen der einen oder der mehreren Solarmodul-Anordnungen (2) in einer Aufnahmeposition.

9. Mobile Einheit nach Anspruch 8, wobei die mobile Einheit eine Mehrzahl der Solarmodul-Anordnungen (2) umfasst, wobei wenigstens einige der Solarmodul-Anordnungen in eine erste Gruppe (26) gruppiert sind, welche dazu eingerichtet ist, sich aus dem Behälter in Richtung einer ausgefalteten Position um eine erste vertikale Faltachse an einer ersten Seite des Behälters (10) auszufalten, wobei vorzugsweise die erste Gruppe (26) wenigstens einen ersten Satz (21) und einen zweiten Satz (22) aus einer oder mehreren Solarmodul-Anordnungen (2) umfasst, wobei der erste Satz dazu eingerichtet ist, sich bezüglich des Behälters um die erste vertikale Faltachse (K1) zu falten, und wobei der zweite Satz (22) dazu eingerichtet ist, sich bezüglich des ersten Satzes um eine zweite vertikale Faltachse (K2) an einer Seite des ersten Satzes gegenüber der ersten Faltachse (K1) zu falten,
wobei vorzugsweise die Gruppe ferner einen dritten Satz (23) von einer oder mehreren Solarmodul-Anordnungen (2) umfasst, wobei der dritte Satz dazu eingerichtet ist, sich bezüglich des ersten Satzes um eine dritte vertikale Faltachse (K3) an derselben Seite des ersten Satzes wie die erste Faltachse zu falten,
wobei vorzugsweise der erste Satz (21) dazu eingerichtet ist, sich weg von dem Behälter (10) in Richtung der ausgefalteten Position zu falten, während der dritte Satz (23) dazu eingerichtet ist, sich zurück in Richtung des Behälters (10) bezüglich des ersten Satzes (21) zu falten.

10. Mobile Einheit nach Anspruch 9, wobei wenigstens einige der Solarmodul-Anordnungen in eine zweite Gruppe (27) gruppiert sind, welche dazu eingerichtet ist, sich aus dem Gehälter in Richtung einer ausgefalteten Position um eine vierte vertikale Faltachse (K4) an einer zweiten Seite des Behälters (10) gegenüber der ersten Seite auszufalten,
wobei vorzugsweise die zweite Gruppe (27) wenigstens einen vierten Satz (24) und einen fünften Satz (25) von einer oder mehreren Solarmodul-Anordnungen (2) umfasst, wobei der vierte Satz (24) dazu eingerichtet ist, sich bezüglich des Behälters (10) um die vierte vertikale Faltachse (K4) zu falten, und wobei der fünfte Satz (25) dazu eingerichtet ist, sich bezüglich des vierten Satzes (24) um eine fünfte vertikale Faltachse (K5) an einer Seite des vierten Satzes (24) gegenüber der vierten Faltachse (K4) zu falten,
wobei vorzugsweise der Behälter (10) eine offene dritte Seite (16) zwischen der ersten Seite (13) und der zweiten Seite (14) aufweist, um es der ersten Gruppe (26) und der zweiten Gruppe (27) zu erlauben, sich in und aus dem Behälter (10) zu falten, wobei die vierte Faltachse (K4) von der offenen dritten Seite (16) über eine Gelenkdistanz beabstandet ist, und wobei die zweite Gruppe (27) von der vierten Faltachse (K4) in eine Richtung weg von der offenen dritten Seite (16) über eine Abstandsdistanz beabstandet ist, wobei die Abstandsdistanz gleich oder größer als die Gelenkdistanz ist,
wobei vorzugsweise die zweite Gruppe (27) in der Aufnahmeposition von der offenen dritten Seite (16) über eine Distanz zurückgenommen ist, welche gleich oder größer als der Raum ist, welcher von der ersten Gruppe (26) in der Aufnahmeposition eingenommen ist.

11. Mobile Einheit nach Anspruch 9 oder 10, wobei die mobile Einheit mit einem oder mehreren Trägern (7) zum Tragen der Basen (6) von jeder der Solarmodul-Anordnungen in der ausgefalteten Position bereitgestellt ist,
wobei vorzugsweise der eine oder die mehreren Träger (7) zum Tragen des vollen Gewichts der einen oder der mehreren Solarmodul-Anordnungen (2) bezüglich des Behälters (10) eingerichtet sind,
wobei vorzugsweise der Behälter (10) dazu eingerichtet ist, auf einer Grundfläche platziert zu sein, wobei der eine oder die mehreren Träger (7) dazu eingerichtet sind, die eine oder die mehreren Solarmodul-Anordnungen (2) mit einem Grundabstand oberhalb der Grundfläche zu tragen.

12. Verfahren zum Ausfahren einer Solarmodul-Anordnung (2) nach Anspruch 1, wobei das Verfahren die Schritte umfasst:
Ausfahren des ersten Solarmoduls (3) aus der ersten Basisposition (A) in Richtung der ersten Ausfahrposition (C) wenigstens teilweise unter dem Einfluss einer ersten Gravitationskraft (F1), welche auf das erste Solarmodul (3) wirkt; und
Umwandeln der ersten Gravitationskraft (F1) mit dem Ausfahrmechanismus (8) in eine Ausfahrkraft (F3), welche die Rotation des zweiten Solarmoduls (4) von der zweiten Basisposition (B) in Richtung der zweiten Ausfahrposition (D) unterstützt.

13. Verfahren nach Anspruch 12, wobei sich das zweite Solarmodul (4) während der Rotation von der zweiten Basisposition (B) in Richtung der zweiten Ausfahrposition (D) durch eine Totpunkt-Position bewegt, in welcher sein Schwerpunkt vertikal oberhalb der zweiten Rotationsachse (S2) liegt, wobei die Ausfahrkraft (F3) zum Unterstützen der Rotation des zweiten Solarmoduls (4) von der zweiten Basisposition (B) in Richtung der Totpunkt-Position eingerichtet ist,
wobei vorzugsweise das Verfahren ferner den Schritt eines Ziehens des zweiten Solarmoduls (4) durch die Totpunkt-Position in Richtung der Totpunkt-Position umfasst,
wobei vorzugsweise das zweite Solarmodul (4) von der Totpunkt-Position in Richtung der zweiten Ausfahrposition (D) wenigstens teilweise unter dem Einfluss einer zweiten Gravitationskraft (F2) ausgefahren wird, welche auf das zweite Solarmodul (4) wirkt, wobei das Verfahren den Schritt eines Bereitstellens eines Pufferelements (82) umfasst, welches wenigstens teilweise die zweite Gravitationskraft (F2) absorbiert.

14. Verfahren nach Anspruch 12 oder 13, wobei sich das zweite Solarmodul (4) in der zweiten Basisposition (B) zwischen der Basis (6) und dem ersten Solarmodul (3) in der ersten Basisposition (A) erstreckt, wobei das erste Solarmodul (3) in Richtung der ersten Ausfahrposition (C) rotiert wird, bevor das zweite Solarmodul (4) in Richtung der zweiten Ausfahrposition (D) rotiert wird.

15. Verfahren nach Anspruch 12, 13 oder 14, wobei das Verfahren den Schritt eines Bereitstellens einer mobilen Einheit umfasst, welche eine Mehrzahl der Solarmodul-Anordnungen (2) und einen Behälter (10) zum Aufnehmen der Mehrzahl von Solarmodul-Anordnungen (2) umfasst, wobei wenigstens einige der Solarmodul-Anordnungen in eine erste Gruppe (26) gruppiert sind, welche sich aus dem Behälter (10) in Richtung einer ausgefalteten Position um eine erste vertikale Faltachse (K1) an einer ersten Seite des Behälters (10) ausfaltet, wobei die erste Gruppe (26) wenigstens einen ersten Satz (21) und einen zweiten Satz (22) von einer oder mehreren Solarmodul-Anordnungen (2) umfasst, wobei sich der erste Satz (21) bezüglich des Behälters (10) um die erste vertikale Faltachse (K1) faltet, und wobei sich der zweite Satz (22) bezüglich des ersten Satzes (21) um eine zweite vertikale Faltachse (K2) an einer Seite des ersten Satzes (21) gegenüber der ersten Faltachse (K1) faltet, wobei die erste Gruppe (26) ferner einen dritten Satz (23) von einer oder mehreren Solarmodul-Anordnungen (2) umfasst, wobei sich der dritte Satz (23) bezüglich des ersten Satzes (21) um eine dritte vertikale Faltachse (K3) an derselben Seite des ersten Satzes (21) wie die erste Faltachse (K1) faltet, wobei das Verfahren ferner die Schritte umfasst: Falten des ersten Satzes (21) weg von dem Behälter (10) in Richtung der ausgefalteten Position; und Falten des dritten Satzes (23) zurück in Richtung des Behälters (10) bezüglich des ersten Satzes (21),
wobei vorzugsweise der zweite Satz (22) in Richtung der ausgefalteten Position gefaltet wird, nachdem der dritte Satz (23) zurück gefaltet worden ist.

## Revendications

1. Assemblage de panneaux solaires (2) comprenant un premier panneau solaire (3), un deuxième panneau solaire (4) et une base (6) pour supporter le premier panneau solaire (3) et le deuxième panneau solaire (4), dans lequel le premier panneau solaire (3) est déployable à partir d'une première position de base (A) au niveau de la base (6) dans une première position de déploiement (C) au-dessous de la base (6) par rotation par rapport à la base (6) autour d'un premier axe de rotation (S1), dans lequel le deuxième panneau solaire (4) est déployable à partir d'une seconde position de base (B) au niveau de la base (6) dans une seconde position de déploiement (D) au-dessus de la base (6) par rotation par rapport à la base (6) autour d'un deuxième axe de rotation (S2), dans lequel le premier panneau solaire (3) est agencé pour être déployé à partir de la première position de base (A) vers la première position de déploiement (C) au moins partiellement sous l'influence d'une première force gravitationnelle (F1) agissant sur le premier panneau solaire (3), **caractérisé en ce que** l'assemblage de panneaux solaires (2) est pourvu d'un mécanisme de déploiement (8) qui raccorde le premier panneau solaire (3) au deuxième panneau solaire (4) pour convertir la première force gravitationnelle (F1) en une force de déploiement (F3) aidant à la rotation du deuxième panneau solaire (4) de la seconde position de base (B) vers la seconde position de déploiement (D).

2. Assemblage de panneaux solaires (2) selon la revendication 1, dans lequel le mécanisme de déploiement (8) est couplé au premier panneau solaire (3) et au deuxième panneau solaire (4) à une première position de couplage (P1) et à une seconde position de couplage (P2), respectivement, dans lequel la première position de couplage (P1) et la seconde position de couplage (P2) sont espacées du premier axe de rotation (S1) et du deuxième axe de rotation (S2), respectivement, dans lequel de préférence le premier panneau solaire (3) a un centre de gravité (G1) qui est espacé du premier axe de rotation (S1), dans lequel la première position de couplage (P1) est au niveau d'un côté du premier axe de rotation (S1) à l'opposé du centre de gravité (G1) du premier panneau solaire (3),
dans lequel de préférence le deuxième panneau solaire (4) a un centre de gravité (G2) qui est espacé du deuxième axe de rotation (S2), dans lequel la seconde position de couplage (P2) est au niveau du même côté du deuxième axe de rotation (S2) que le centre de gravité (G2) du deuxième panneau solaire (4),
dans lequel de préférence le deuxième panneau solaire (4), au cours de la rotation de la seconde position de base (B) vers la seconde position de déploiement (D), passe par une position de point mort (E) dans laquelle son centre de gravité (G2) est verticalement au-dessus du deuxième axe de rotation (S2), dans lequel la force de déploiement (F3) est agencée pour aider à la rotation du deuxième panneau solaire (4) à partir de la seconde position de base (B) vers la position de point mort (E).

3. Assemblage de panneaux solaires (2) selon la revendication 2, dans lequel le mécanisme de déploiement (8) comprend un organe tampon (82) qui est couplé au deuxième panneau solaire (4) à la seconde position de couplage (P2) et un organe de raccordement (80) qui est couplé au premier panneau solaire (3) à la première position de couplage (P1), dans lequel l'organe de raccordement (80) est relié à l'organe tampon (82) pour transmettre la force de déploiement (F3) du premier panneau solaire (3) au deuxième panneau solaire (4), dans lequel l'organe tampon (82) a une longueur qui est variable à l'intérieur d'une plage tampon, dans lequel le deuxième panneau solaire (4) est rotatif via sa position de point mort à l'intérieur de la plage tampon de l'organe tampon (82).

4. Assemblage de panneaux solaires (2) selon la revendication 3, dans lequel le mécanisme de déploiement (8) comprend en outre un levier (81) qui relie l'organe de raccordement (80) à l'organe tampon (82), dans lequel le levier (81) est rotatif par rapport au deuxième panneau solaire (4) autour d'un axe de levier (L), dans lequel l'organe de raccordement (80) et l'organe tampon (82) sont couplés au levier (81) du même côté de et espacés de l'axe de levier (L),
dans lequel de préférence l'axe de levier (L) est parallèle ou sensiblement parallèle au deuxième axe de rotation (S2),
dans lequel de préférence le levier (81) est agencé pour s'étendre jusqu'au-dessus du deuxième panneau solaire (4) lorsque le deuxième panneau solaire (4) est dans la seconde position de base (B), dans lequel l'organe tampon (82) est agencé pour transmettre la force de déploiement (F3) sur le deuxième panneau solaire (4) lorsque l'organe tampon (82) se trouve à l'extrémité supérieure de la plage tampon ou à proximité de celle-ci,
dans lequel de préférence le levier (81) comprend une première section de levier (83) qui est rotative par rapport à l'axe de levier (L) et une seconde section de levier (84) qui est raccordée de manière articulée à la première section de levier (83) au niveau du côté de la première section de levier (83) faisant face à l'écart de l'axe de levier (L), dans lequel l'organe de raccordement (80) est couplé à la première section de levier (83) et l'organe tampon (82) est couplé à la seconde section de levier (84).

5. Assemblage de panneaux solaires (2) selon la revendication 3 ou 4, dans lequel le deuxième panneau solaire (4) est agencé pour être déployé vers la seconde position de déploiement (D) au moins partiellement sous l'influence d'une deuxième force gravitationnelle (F2) agissant sur le deuxième panneau solaire (4), dans lequel l'organe tampon (82) est agencé pour absorber au moins partiellement la deuxième force gravitationnelle (F2), et/ou
dans lequel l'organe tampon (82) est un accumulateur, de préférence un accumulateur pneumatique et avec le plus de préférence un ressort à gaz.

6. Assemblage de panneaux solaires (2) selon l'une quelconque des revendications précédentes, dans lequel l'assemblage de panneaux solaires (2) est pourvu d'un organe d'arrêt (61) qui arrête le premier panneau solaire (3) dans la première position de déploiement (C), dans lequel le mécanisme de déploiement (8) est agencé pour retenir le deuxième panneau solaire (4) dans la seconde position de déploiement (D) lorsque le premier panneau solaire (3) est arrêté par l'organe d'arrêt (61) dans la première position de déploiement (C), et/ou
dans lequel le deuxième panneau solaire (4) dans la seconde position de base (B) est agencé pour s'étendre entre la base (6) et le premier panneau solaire (3) dans la première position de base (A), et/ou
dans lequel la base (6) comprend un troisième panneau solaire (5) s'étendant entre le premier axe de rotation (S1) et le deuxième axe de rotation (S2), et/ou
dans lequel les panneaux solaires sont agencés pour être parallèles, sensiblement parallèles, coplanaires ou sensiblement coplanaires lorsque le premier panneau solaire (3) et le deuxième panneau solaire (4) sont déployés dans la première position de déploiement (C) et dans la seconde position de déploiement (D), respectivement, et/ou
dans lequel l'assemblage de panneaux solaires (2) comprend en outre un support (7) et une poutre d'angle (89) pour supporter la base (6) à un angle oblique par rapport au support (7).

7. Assemblage de panneaux solaires (2) selon l'une quelconque des revendications précédentes, dans lequel le premier axe de rotation (S1) et le deuxième axe de rotation (S2) sont espacés l'un de l'autre, et/ou
dans lequel le premier axe de rotation (S1) et le deuxième axe de rotation (S2) sont parallèles ou sensiblement parallèles, et/ou
dans lequel le premier axe de rotation (S1) et le deuxième axe de rotation (S2) sont horizontaux ou sensiblement horizontaux.

8. Unité mobile comprenant un ou plusieurs des assemblages de panneaux solaires selon l'une quelconque des revendications précédentes et un contenant (10) pour stocker lesdits un ou plusieurs assemblages de panneaux solaires (2) dans une position de stockage.

9. Unité mobile selon la revendication 8, dans laquelle l'unité mobile comprend une pluralité des assemblages de panneaux solaires (2), dans laquelle au moins certains des assemblages de panneaux solaires sont regroupés dans un premier groupe (26) qui est agencé pour se déplier du contenant vers une position dépliée autour d'un premier axe de pliage vertical au niveau d'un premier côté du contenant (10),
dans laquelle de préférence le premier groupe (26) comprend au moins un premier ensemble (21) et un deuxième ensemble (22) d'un ou plusieurs assemblages de panneaux solaires (2), dans laquelle le premier ensemble est agencé pour se plier par rapport au contenant autour du premier axe de pliage vertical (K1), et dans laquelle le deuxième ensemble (22) est agencé pour se plier par rapport au premier ensemble autour d'un deuxième axe de pliage vertical (K2) au niveau d'un côté du premier ensemble à l'opposé du premier axe de pliage (K1),
dans laquelle de préférence le premier groupe comprend en outre un troisième ensemble (23) d'un ou plusieurs assemblages de panneaux solaires (2), dans laquelle le troisième ensemble est agencé pour se plier par rapport au premier ensemble autour d'un troisième axe de pliage vertical (K3) au niveau du même côté du premier ensemble que le premier axe de pliage,
dans laquelle de préférence le premier ensemble (21) est agencé pour se plier à l'écart du contenant (10) vers la position dépliée, alors que le troisième ensemble (23) est agencé pour se replier vers le contenant (10) par rapport au premier ensemble (21).

10. Unité mobile selon la revendication 9, dans laquelle au moins certains des assemblages de panneaux solaires sont regroupés dans un second groupe (27) qui est agencé pour se déplier du contenant vers une position dépliée autour d'un quatrième axe de pliage vertical (K4) au niveau d'un deuxième côté du contenant (10), à l'opposé du premier côté,
dans laquelle de préférence le second groupe (27) comprend au moins un quatrième ensemble (24) et un cinquième ensemble (25) d'un ou plusieurs assemblages de panneaux solaires (2), dans laquelle le quatrième ensemble (24) est agencé pour se plier par rapport au contenant (10) autour du quatrième axe de pliage vertical (K4) et dans lequel le cinquième ensemble (25) est agencé pour se plier par rapport au quatrième ensemble (24) autour d'un cinquième axe de pliage vertical (K5) au niveau d'un côté du quatrième ensemble (24) à l'opposé du quatrième axe de pliage (K4),
dans laquelle de préférence le contenant (10) comporte un troisième côté ouvert (16) entre le premier côté (13) et le deuxième côté (14) pour permettre au premier groupe (26) et au second groupe (27) de se plier dans le contenant (10) et de s'en déplier, dans laquelle le quatrième axe de pliage (K4) est espacé du troisième côté ouvert (16) sur une distance de charnière et dans laquelle le second groupe (27) est espacé du quatrième axe de pliage (K4) dans un sens à l'écart du troisième côté ouvert (16) sur une distance d'espacement, dans laquelle la distance d'espacement est supérieure ou égale à la distance de charnière,
dans laquelle de préférence le second groupe (27), dans la position de stockage, est enfoncé depuis le troisième côté ouvert (16) sur une distance qui est supérieure ou égale à l'espace consommé par le premier groupe (26) dans ladite position de stockage.

11. Unité mobile selon la revendication 9 ou 10, dans laquelle l'unité mobile est pourvue d'un ou plusieurs supports (7) pour supporter les bases (6) de chacun des assemblages de panneaux solaires dans la position dépliée,
dans laquelle de préférence les un ou plusieurs supports (7) sont agencés pour supporter le poids total des un ou plusieurs assemblages de panneaux solaires (2) par rapport au contenant (10),
dans laquelle de préférence le contenant (10) est agencé pour être placé sur une surface de sol et les un ou plusieurs supports (7) sont agencés pour supporter les un ou plusieurs assemblages de panneaux solaires (2) avec une garde au sol au-dessus de la surface de sol.

12. Méthode de déploiement d'un assemblage de panneaux solaires (2) selon la revendication 1, dans laquelle la méthode comprend les étapes de :
déploiement du premier panneau solaire (3) à partir de la première position de base (A) vers la première position de déploiement (C) au moins partiellement sous l'influence d'une première force gravitationnelle (F1) agissant sur le premier panneau solaire (3) ; et
conversion de la première force gravitationnelle (F1) avec le mécanisme de déploiement (8) en une force de déploiement (F3) aidant à la rotation du deuxième panneau solaire (4) à partir de la seconde position de base (B) vers la seconde position de déploiement (D).

13. Méthode selon la revendication 12, dans laquelle le deuxième panneau solaire (4), au cours de la rotation de la seconde position de base (B) vers la seconde position de déploiement (D), passe par une position de point mort dans laquelle son centre de gravité est verticalement au-dessus du deuxième axe de rotation (S2), dans laquelle la force de déploiement (F3) est agencée pour aider à la rotation du deuxième panneau solaire (4) de la seconde position de base (B) vers la position de point mort,
dans laquelle de préférence la méthode comprend en outre l'étape du tirage du deuxième panneau solaire (4) via la position de point mort vers la position de point mort,
dans laquelle de préférence le deuxième panneau solaire (4) est déployé à partir de la position de point mort vers la seconde position de déploiement (D) au moins partiellement sous l'influence d'une deuxième force gravitationnelle (F2) agissant sur le deuxième panneau solaire (4), dans laquelle la méthode comprend l'étape de fourniture d'un organe tampon (82) qui absorbe au moins partiellement la deuxième force gravitationnelle (F2).

14. Méthode selon la revendication 12 ou 13, dans laquelle le deuxième panneau solaire (4) dans la seconde position de base (B) s'étend entre la base (6) et le premier panneau solaire (3) dans la première position de base (A), dans laquelle le premier panneau solaire (3) est tourné vers la première position de déploiement (C) avant que le deuxième panneau solaire (4) ne soit tourné vers la seconde position de déploiement (D).

15. Méthode selon la revendication 12, 13 ou 14, dans laquelle la méthode comprend l'étape de fourniture d'une unité mobile comprenant une pluralité d'assemblages de panneaux solaires (2) et un contenant (10) pour stocker la pluralité d'assemblages de panneaux solaires (2), dans laquelle au moins certains des assemblages de panneaux solaires sont regroupés dans un premier groupe (26) qui se déplie du contenant (10) vers une position dépliée autour d'un premier axe de pliage vertical (K1) au niveau d'un premier côté du contenant (10), dans laquelle le premier groupe (26) comprend au moins un premier ensemble (21) et un deuxième ensemble (22) d'un ou plusieurs assemblages de panneaux solaires (2), dans laquelle le premier ensemble (21) se plie par rapport au contenant (10) autour du premier axe de pliage vertical (K1), et dans laquelle le deuxième ensemble (22) se plie par rapport au premier ensemble (21) autour d'un deuxième axe de pliage vertical (K2) au niveau d'un côté du premier ensemble (21) à l'opposé du premier axe de pliage (K1), dans laquelle le premier groupe (26) comprend en outre un troisième ensemble (23) d'un ou plusieurs assemblages de panneaux solaires (2), dans laquelle le troisième ensemble (23) se plie par rapport au premier ensemble (21) autour d'un troisième axe de pliage vertical (K3) au niveau du même côté du premier ensemble (21) que le premier axe de pliage (K1), dans laquelle la méthode comprend en outre les étapes de : pliage du premier ensemble (21) à l'écart du contenant (10) vers la position dépliée ; et repliage du troisième ensemble (23) vers le contenant (10) par rapport au premier ensemble (21),
dans laquelle de préférence le deuxième ensemble (22) est plié vers la position dépliée après que le troisième ensemble (23) a été replié.
